# EUROPEAN PATENT APPLICATION

(11) **EP 4 727 181 A1**
(43) Date of publication of application: **15.04.2026**
(21) Application number: 23940135.9
(22) Date of filing: 08.06.2023
(51) Int. Cl.: H04W 8/20

(54) **DATA COLLECTION AND PROCESSING METHOD AND APPARATUS**

(71) Applicant: Huawei Technologies Co., Ltd., Shenzhen, Guangdong 518129 (CN)
(72) Inventor: ZHAO, Mingyu, Shenzhen, Guangdong 518129 (CN); YAN, Xueqiang, Shenzhen, Guangdong 518129 (CN); XI, Yan, Shenzhen, Guangdong 518129 (CN); WANG, Junfan, Shenzhen, Guangdong 518129 (CN)
(74) Representative: Körber, Martin Hans
(86) International application number: PCT/CN2023/099239
(87) International publication number: WO 2024/250249

(57) **Abstract**

Disclosed are a data collection and processing method and an apparatus, which relate to the field of communication technologies and are capable of unifying data collection and/or filtering and processing operations and reducing data transmission and storage costs. The method includes: obtaining a match table and an action set that are associated with a first communication apparatus; and sending, to the first communication apparatus, the match table and the action set that are associated with the first communication apparatus, where the first communication apparatus is an initial data agent apparatus in a data transmission process, the match table indicates collection and/or filtering processing on data obtained from a data source, the match table includes identification information of the first communication apparatus and a service identifier, and the action set indicates one or more actions associated with the service identifier.

## Description

### TECHNICAL FIELD

This application relates to the field of communication technologies, and in particular, to a data collection and processing method and an apparatus.

### BACKGROUND

In a communication system, data collection and analytics may be performed on network states and behavior, to detect potential network faults based on analytics results, thereby performing network optimization and improving network performance.

A plurality of servers may be deployed in the communication system, and one or more network elements may be mounted on each server. Data collection may be implemented by logging in to each server, searching for a network element corresponding to data to be collected, and then downloading the data from the found network element.

However, operations in the foregoing data collection method are relatively complex, and there is no unified data collection and processing in a data collection process. Consequently, missing or repeated data collection is likely to occur. When there is massive data, transmission and storage costs of the massive data are relatively high. Therefore, how to perform data collection and transmission becomes an urgent technical problem to be resolved.

### SUMMARY

Embodiments of this application provide a data collection and processing method and an apparatus, to unify data collection and/or filtering and processing operations and reduce data transmission and storage costs.

According to a first aspect, an embodiment of this application provides a data collection and processing method. The method may be performed by a data orchestration or control apparatus, or a chip, a chip system, or a system-on-a-chip in a data orchestration or control apparatus. The method may include: obtaining a match table and an action set that are associated with a first communication apparatus; and sending, to the first communication apparatus, the match table and the action set that are associated with the first communication apparatus, where the first communication apparatus is an initial data agent apparatus in a data transmission process, the match table indicates collection and/or filtering processing on data obtained from a data source, the match table includes identification information of the first communication apparatus and a service identifier, and the action set indicates one or more actions associated with the service identifier.

Based on the first aspect, because the first communication apparatus is the initial data agent apparatus in the data transmission process, the first communication apparatus may implement unified data collection and/or filtering processing at an initial stage of the data transmission process based on the match table and the action set that are delivered by the data orchestration or control apparatus, thereby avoiding missing or repeated data collection and/or filtering, reducing a data volume, reducing data transmission and storage costs, and unifying data collection and/or filtering and processing operations. In addition, the data collection and processing method in this embodiment of this application is applicable to collection and/or filtering and processing of a plurality of types of data such as network data, sensing, and artificial intelligence AI model.

In a possible design, the match table further includes one or more of the following: collection and/or filtering time, collection and/or filtering area, measurement quantity, data type, source address of data, destination address of data, quality of service policy, forwarding policy, network-element-level status information, port-level status information, queue-level status information, data-packet-level status information, flow-table-level status information, or flow-level status information.

Based on this possible design, the match table may support fine-grained collection and precise filtering of data at the data source, removing redundant, erroneous, and duplicate data, and performing data fusion, pruning, and the like, to obtain accurate and high-quality data, so that on-path processing is implemented based on the accurate and high-quality data. The match table may further support collection and/or filtering from files (for example, file-type data generated from data collection and/or filtering processing performed based on the match table), collection and/or filtering from events (for example, event-type data generated from data collection and/or filtering processing triggered based on events), and fine-grained data collection and/or filtering from a network element level to a flow level, thereby meeting the need for fine-grained on-path data processing in data bearers.

In a possible design, when data collection and/or filtering requirements of a plurality of service requirements from different users are identical, the plurality of service requirements are associated with a same match table, and the match table includes a plurality of different service identifiers associated with the plurality of service requirements.

Based on this possible design, a plurality of different service identifiers may be carried in one match table, to indicate that the match table is associated with a plurality of action sets, and further indicate service requirements for a plurality of data services. Collection and/or filtering processing performed by the first communication apparatus based on the match table is the same, and different processing actions are subsequently performed based on different action sets, so that one-time collection and/or filtering can be applied multiple times, thereby avoiding repeated collection and/or filtering.

In a possible design, the first communication apparatus is associated with one or more match tables and one or more action sets.

Based on this possible design, each match table may be associated with one or more action sets, and each action set may also be associated with one or more match tables. One match table is associated with a plurality of action sets, to indicate that for a plurality of data services, collection and/or filtering processing performed by the first communication apparatus based on the match table is the same, and different processing actions are subsequently performed based on different action sets, so that one-time collection and/or filtering can be applied multiple times, thereby avoiding repeated collection and/or filtering. Alternatively, one action set is associated with a plurality of match tables, to indicate that one data service may have a plurality of data sources. The first communication apparatus may perform collection and/or filtering processing on data by using different match tables for different data sources, and subsequently perform, based on the same action set, a same processing action (such as fusion or concatenation) on data obtained based on different match tables, so that data can be obtained from a plurality of data sources, to avoid missing data collection and simplify a data processing operation by using the same action set for processing.

In a possible design, the first communication apparatus is the data source; or the first communication apparatus is a next-hop data agent apparatus of the data source.

Based on this possible design, if the data source has a data agent function, the data source may be determined to be the first communication apparatus. If the data source does not have a data agent function, the next-hop data agent apparatus of the data source may be determined to be the first communication apparatus.

In a possible design, before the obtaining the match table and the action set that are associated with the first communication apparatus, the method further includes: obtaining a service requirement, where the data source is a source device of data corresponding to the service requirement, and the service identifier indicates the service requirement.

Based on this possible design, the match table and the action set that are associated with the first communication apparatus may be determined based on the service requirement.

In a possible design, the method further includes: sending first indication information to the first communication apparatus, where the first indication information indicates a service identifier added to processed data.

Based on this possible design, the data orchestration or control apparatus may include the service identifier in the match table, to indicate the first communication apparatus to add the service identifier to the processed data. Alternatively, the data orchestration or control apparatus may use explicit indication information (for example, the first indication information) to indicate the first communication apparatus to add the service identifier to the processed data. In a possible implementation, the data orchestration or control apparatus may further indicate, by using the first indication information, the service identifier added to the processed data.

In a possible design, the method further includes: receiving capability information from one or more data agent apparatuses, where the capability information includes one or more of the following: a data collection and/or filtering capability, a preprocessing capability, an analytics capability, and a storage capability; and determining the first communication apparatus based on the service requirement and the capability information of the one or more data agent apparatuses.

In a possible design, the data collection and/or filtering capability includes one or more of the following: collection and/or filtering time, collection and/or filtering area, measurement quantity, data type, source address of data, destination address of data, quality of service policy, network-element-level status information, port-level status information, queue-level status information, data-packet-level status information, flow-table-level status information, or flow-level status information.

Based on the foregoing two possible designs, an appropriate first communication apparatus may be selected based on capability information of each data agent apparatus.

In a possible design, the sending, to the first communication apparatus, the match table and the action set that are associated with the first communication apparatus includes: sending, to the first communication apparatus, a data forwarding entry carrying the match table and the action set that are associated with the first communication apparatus, where the data forwarding entry indicates address information of a next-hop communication apparatus of the first communication apparatus.

In a possible design, the method further includes: sending, to a second communication apparatus, an action set associated with the second communication apparatus, where the second communication apparatus is a non-initial data agent apparatus in the data transmission process.

Based on this possible design, when the data orchestration or control apparatus determines a plurality of data agent apparatuses for the data transmission process, the data orchestration or control apparatus may further send, to each non-initial data agent apparatus (that is, the second communication apparatus), an action set associated with the respective non-initial data agent apparatus.

In a possible design, the method further includes: sending first indication information to the second communication apparatus, where the first indication information indicates a service identifier added to processed data.

In a possible design, the method further includes: receiving capability information from one or more data agent apparatuses, where the capability information includes one or more of the following: a data collection and/or filtering capability, a preprocessing capability, an analytics capability, and a storage capability; and determining one or more second communication apparatuses based on the service requirement and the capability information of the one or more data agent apparatuses.

In a possible design, the method further includes: sending a collection instruction to the data source, where the collection instruction includes the service identifier, and the collection instruction instructs the data source to add the service identifier to collected data.

According to a second aspect, an embodiment of this application provides a data collection and processing method. The method may be performed by a first communication apparatus, or a chip, a chip system, or a system-on-a-chip in a first communication apparatus. The method may include: receiving, from a data orchestration or control apparatus, a match table and an action set that are associated with the first communication apparatus; obtaining first data; and sending second data. The first communication apparatus is an initial data agent apparatus in a data transmission process, the match table indicates collection and/or filtering processing on data obtained from a data source, the match table includes identification information of the first communication apparatus and a service identifier, and the action set indicates one or more actions associated with the service identifier; the first data is data obtained by performing, based on the match table, collection and/or filtering processing on data corresponding to a service requirement, and the first data includes the service identifier; and the second data is data obtained by processing the first data based on the service identifier and the action set, and the second data includes the service identifier.

Based on the second aspect, because the first communication apparatus is the initial data agent apparatus in the data transmission process, the first communication apparatus may implement unified data collection and/or filtering processing at an initial stage of the data transmission process based on the match table and the action set that are delivered by the data orchestration or control apparatus, thereby avoiding missing or repeated data collection and/or filtering, reducing a data volume, reducing data transmission and storage costs, and unifying data collection and/or filtering and processing operations. In addition, the data collection and processing method in this embodiment of this application is applicable to collection and/or filtering and processing of a plurality of types of data such as network data, sensing, and AI model.

In a possible design, the match table further includes one or more of the following: collection and/or filtering time, collection and/or filtering area, measurement quantity, data type, source address of data, destination address of data, quality of service policy, forwarding policy, network-element-level status information, port-level status information, queue-level status information, data-packet-level status information, flow-table-level status information, or flow-level status information.

In a possible design, when data collection and/or filtering requirements of a plurality of service requirements from different users are identical, the plurality of service requirements are associated with a same match table, and the match table includes a plurality of different service identifiers associated with the plurality of service requirements.

In a possible design, the first communication apparatus is associated with one or more match tables and one or more action sets.

In a possible design, the first communication apparatus is the data source; or the first communication apparatus is a next-hop data agent apparatus of the data source.

Based on the foregoing four possible designs, for technical effects that can be achieved by the four possible designs, refer to related descriptions of the possible designs in the first aspect. Details are not described again.

In a possible design, if the first communication apparatus is the data source, the obtaining the first data includes: receiving a collection instruction from the data orchestration or control apparatus; and obtaining the first data according to the collection instruction, where the collection instruction includes the service identifier, and the collection instruction instructs the data source to add the service identifier to collected data.

Based on this possible design, when the first communication apparatus is the data source, the first communication apparatus may determine the first data based on the match table when receiving the collection instruction, to implement unified data collection and/or filtering processing at the initial stage of the data transmission process, thereby avoiding missing or repeated data collection and/or filtering, reducing the data volume, reducing the data transmission and storage costs, and unifying data collection and/or filtering operations.

In a possible design, if the first communication apparatus is the data source, the obtaining the first data includes: obtaining the first data by performing data collection and/or filtering based on the match table.

Based on this possible design, when the first communication apparatus is the data source, the first communication apparatus may alternatively perform data collection and/or filtering based on the match table, to obtain the first data, and the data orchestration or control apparatus may not need to send a collection instruction to the first communication apparatus, thereby reducing signaling overheads.

In a possible design, if the first communication apparatus is the next-hop data agent apparatus of the data source, the obtaining the first data includes: sending a collection instruction to the data source based on the match table; receiving collected data from the data source; and obtaining the first data by processing the collected data based on the match table.

Based on this possible design, when the first communication apparatus is the next-hop data agent apparatus of the data source, the first communication apparatus may deliver the collection instruction to obtain the data collected by the data source, and then determine the first data based on the match table, to implement unified data collection and/or filtering processing at the initial stage of the data transmission process, thereby avoiding missing or repeated data collection and/or filtering, reducing the data volume, reducing the data transmission and storage costs, and unifying data collection and/or filtering operations.

In a possible design, the collection instruction includes the service identifier, and the collection instruction instructs the data source to add the service identifier to the collected data.

Based on this possible design, the service identifier is carried in the collection instruction, so that the data source can add the service identifier to the collected data, and that the first communication apparatus performs corresponding processing based on the service identifier by using the match table associated with the service identifier.

In a possible design, the method further includes: obtaining a plurality of pieces of first data, where the plurality of pieces of first data have a same data service identifier but different data pipeline identifiers; and if the action set of the first communication apparatus includes data fusion, fusing the plurality of pieces of first data.

Based on this possible design, for a plurality of pieces of first data that are of a same service requirement and that are from different data sources, if the plurality of pieces of first data follow different paths after the first communication apparatus, data fusion may be set in the action set of the first communication apparatus, to indicate the first communication apparatus to fuse the plurality of pieces of first data, or data fusion may not be set in the action set of the first communication apparatus, and the first communication apparatus may not fuse the plurality of pieces of first data. Alternatively, if the plurality of pieces of first data follow a same path after the first communication apparatus, data fusion may be set in the action set of the first communication apparatus, to indicate the first communication apparatus to fuse the plurality of pieces of first data.

In a possible design, the method further includes: receiving first indication information from the first communication apparatus, where the first indication information indicates a service identifier added to processed data.

In a possible design, the method further includes: sending capability information to the data orchestration or control apparatus, where the capability information includes one or more of the following: a data collection and/or filtering capability, a preprocessing capability, an analytics capability, and a storage capability, and the data collection and/or filtering capability includes one or more of the following: collection and/or filtering time, collection and/or filtering area, measurement quantity, data type, source address of data, destination address of data, quality of service policy, network-element-level status information, port-level status information, queue-level status information, data-packet-level status information, flow-table-level status information, or flow-level status information.

In a possible design, receiving, from the data orchestration or control apparatus, the match table and the action set that are associated with the first communication apparatus includes: receiving a data forwarding entry from the data orchestration or control apparatus, where the data forwarding entry includes the match table and the action set that are associated with the first communication apparatus, and the data forwarding entry indicates address information of a next-hop communication apparatus of the first communication apparatus.

According to a third aspect, an embodiment of this application provides a data collection and processing method. The method may be performed by a data source, or a chip, a chip system, or a system-on-a-chip in a data source. The method may include: obtaining a collection instruction; and sending collected data to a first communication apparatus according to the collection instruction. The collection instruction includes a service identifier, and the collection instruction instructs the data source to add the service identifier to the collected data; and the first communication apparatus is an initial data agent apparatus in a data transmission process, and the collected data includes the service identifier.

Based on the third aspect, the data source may add the service identifier to the collected data according to the collection instruction, so that the first communication apparatus subsequently performs corresponding processing on the collected data based on a match table and an action set that correspond to the service identifier, to implement unified data collection and/or filtering processing at an initial stage of the data transmission process, thereby avoiding missing or repeated data collection and/or filtering, reducing a data volume, reducing data transmission and storage costs, and unifying data collection and/or filtering and processing operations. In addition, the data collection and processing method in this embodiment of this application is applicable to collection and/or filtering and processing of a plurality of types of data such as network data, sensing, and AI model.

In a possible design, obtaining the collection instruction includes: receiving the collection instruction from a data orchestration or control apparatus; or receiving the collection instruction from the first communication apparatus.

According to a fourth aspect, an embodiment of this application provides a communication apparatus. The communication apparatus may be applied to the data orchestration or control apparatus in the first aspect, to implement a function performed by the data orchestration or control apparatus. The communication apparatus may be the data orchestration or control apparatus, or may be a chip, a chip system, a system-on-a-chip, or the like in the data orchestration or control apparatus. The communication apparatus may perform, through hardware, the function performed by the data orchestration or control apparatus, or implement the function by hardware executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The processing module is configured to obtain a match table and an action set that are associated with a first communication apparatus. The transceiver module is configured to send, to the first communication apparatus, the match table and the action set that are associated with the first communication apparatus, where the first communication apparatus is an initial data agent apparatus in a data transmission process, the match table indicates collection and/or filtering processing on data obtained from a data source, the match table includes identification information of the first communication apparatus and a service identifier, and the action set indicates one or more actions associated with the service identifier.

In a possible design, the match table further includes one or more of the following: collection and/or filtering time, collection and/or filtering area, measurement quantity, data type, source address of data, destination address of data, quality of service policy, forwarding policy, network-element-level status information, port-level status information, queue-level status information, data-packet-level status information, flow-table-level status information, or flow-level status information.

In a possible design, when data collection and/or filtering requirements of a plurality of service requirements from different users are identical, the plurality of service requirements are associated with a same match table, and the match table includes a plurality of different service identifiers associated with the plurality of service requirements.

In a possible design, the first communication apparatus is associated with one or more match tables and one or more action sets.

In a possible design, the first communication apparatus is the data source; or the first communication apparatus is a next-hop data agent apparatus of the data source.

In a possible design, the transceiver module is further configured to obtain a service requirement before the processing module obtains the match table and the action set that are associated with the first communication apparatus, where the data source is a source device of data corresponding to the service requirement, and the service identifier indicates the service requirement.

In a possible design, the transceiver module is further configured to send first indication information to the first communication apparatus, where the first indication information indicates a service identifier added to processed data.

In a possible design, the transceiver module is further configured to receive capability information from one or more data agent apparatuses, where the capability information includes one or more of the following: a data collection and/or filtering capability, a preprocessing capability, an analytics capability, and a storage capability; and the processing module is further configured to determine the first communication apparatus based on the service requirement and the capability information of the one or more data agent apparatuses.

In a possible design, the data collection and/or filtering capability includes one or more of the following: collection and/or filtering time, collection and/or filtering area, measurement quantity, data type, source address of data, destination address of data, quality of service policy, network-element-level status information, port-level status information, queue-level status information, data-packet-level status information, flow-table-level status information, or flow-level status information.

In a possible design, the transceiver module is specifically configured to send, to the first communication apparatus, a data forwarding entry carrying the match table and the action set that are associated with the first communication apparatus, where the data forwarding entry indicates address information of a next-hop communication apparatus of the first communication apparatus.

In a possible design, the transceiver module is further configured to send, to a second communication apparatus, an action set associated with the second communication apparatus, where the second communication apparatus is a non-initial data agent apparatus in the data transmission process.

In a possible design, the transceiver module is further configured to send first indication information to the second communication apparatus, where the first indication information indicates a service identifier added to processed data.

In a possible design, the transceiver module is further configured to receive capability information from one or more data agent apparatuses, where the capability information includes one or more of the following: a data collection and/or filtering capability, a preprocessing capability, an analytics capability, and a storage capability; and the processing module is further configured to determine one or more second communication apparatuses based on the service requirement and the capability information of the one or more data agent apparatuses.

In a possible design, the transceiver module is further configured to send a collection instruction to the data source, where the collection instruction includes the service identifier, and the collection instruction instructs the data source to add the service identifier to collected data.

For technical effects brought by any one of the fourth aspect or the possible designs of the fourth aspect, refer to the technical effects brought by any one of the first aspect or the possible designs of the first aspect. Details are not described again.

According to a fifth aspect, an embodiment of this application provides a communication apparatus. The communication apparatus may be applied to the first communication apparatus in the second aspect, to implement a function performed by the first communication apparatus. The communication apparatus may be the first communication apparatus, or may be a chip, a chip system, a system-on-a-chip, or the like in the first communication apparatus. The communication apparatus may perform, through hardware, the function performed by the first communication apparatus, or implement the function by hardware executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module is configured to receive, from a data orchestration or control apparatus, a match table and an action set that are associated with the first communication apparatus. The processing module is configured to obtain first data. The transceiver module is further configured to send second data. The first communication apparatus is an initial data agent apparatus in a data transmission process, the match table indicates collection and/or filtering processing on data obtained from a data source, the match table includes identification information of the first communication apparatus and a service identifier, and the action set indicates one or more actions associated with the service identifier; the first data is data obtained by performing, based on the match table, collection and/or filtering processing on data corresponding to a service requirement, and the first data includes the service identifier; and the second data is data obtained by processing the first data based on the service identifier and the action set, and the second data includes the service identifier.

In a possible design, the match table further includes one or more of the following: collection and/or filtering time, collection and/or filtering area, measurement quantity, data type, source address of data, destination address of data, quality of service policy, forwarding policy, network-element-level status information, port-level status information, queue-level status information, data-packet-level status information, flow-table-level status information, or flow-level status information.

In a possible design, when data collection and/or filtering requirements of a plurality of service requirements from different users are identical, the plurality of service requirements are associated with a same match table, and the match table includes a plurality of different service identifiers associated with the plurality of service requirements.

In a possible design, the first communication apparatus is associated with one or more match tables and one or more action sets.

In a possible design, the first communication apparatus is the data source; or the first communication apparatus is a next-hop data agent apparatus of the data source.

In a possible design, if the first communication apparatus is the data source, the transceiver module is further configured to receive a collection instruction from the data orchestration or control apparatus; and the processing module is specifically configured to obtain the first data according to the collection instruction, where the collection instruction includes the service identifier, and the collection instruction instructs the data source to add the service identifier to collected data.

In a possible design, if the first communication apparatus is the data source, the processing module is specifically configured to obtain the first data by performing data collection and/or filtering based on the match table.

In a possible design, if the first communication apparatus is the next-hop data agent apparatus of the data source, the transceiver module is further configured to send a collection instruction to the data source based on the match table, and receive collected data from the data source; and the processing module is specifically configured to obtain the first data by processing the collected data based on the match table.

In a possible design, the collection instruction includes the service identifier, and the collection instruction instructs the data source to add the service identifier to the collected data.

In a possible design, the processing module is further configured to: obtain a plurality of pieces of first data; and if the action set of the first communication apparatus includes data fusion, fuse the plurality of pieces of first data, where the plurality of pieces of first data have a same data service identifier but different data pipeline identifiers.

In a possible design, the transceiver module is further configured to receive first indication information from the first communication apparatus, where the first indication information indicates a service identifier added to processed data.

In a possible design, the transceiver module is further configured to send capability information to the data orchestration or control apparatus, where the capability information includes one or more of the following: a data collection and/or filtering capability, a preprocessing capability, an analytics capability, and a storage capability, and the data collection and/or filtering capability includes one or more of the following: collection and/or filtering time, collection and/or filtering area, measurement quantity, data type, source address of data, destination address of data, quality of service policy, network-element-level status information, port-level status information, queue-level status information, data-packet-level status information, flow-table-level status information, or flow-level status information.

In a possible design, the transceiver module is specifically configured to receive a data forwarding entry from the data orchestration or control apparatus, where the data forwarding entry includes the match table and the action set that are associated with the first communication apparatus, and the data forwarding entry indicates address information of a next-hop communication apparatus of the first communication apparatus.

For technical effects brought by any one of the fifth aspect or the possible designs of the fifth aspect, refer to the technical effects brought by any one of the second aspect or the possible designs of the second aspect. Details are not described again.

According to a sixth aspect, an embodiment of this application provides a communication apparatus. The communication apparatus may be applied to the data source in the third aspect, to implement a function performed by the data source. The communication apparatus may be the data source, or may be a chip, a chip system, a system-on-a-chip, or the like in the data source. The communication apparatus may perform, through hardware, the function performed by the data source, or implement the function by hardware executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module is configured to obtain a collection instruction. The processing module is configured to perform data collection according to the collection instruction, to obtain collected data. The transceiver module is further configured to send the collected data to a first communication apparatus. The collection instruction includes a service identifier, and the collection instruction instructs the data source to add the service identifier to the collected data; and the first communication apparatus is an initial data agent apparatus in a data transmission process, and the collected data includes the service identifier.

In a possible design, the transceiver module is specifically configured to: receive the collection instruction from a data orchestration or control apparatus; or receive the collection instruction from the first communication apparatus.

For technical effects brought by any one of the sixth aspect or the possible designs of the sixth aspect, refer to the technical effects brought by any one of the third aspect or the possible designs of the third aspect. Details are not described again.

According to a seventh aspect, an embodiment of this application provides a communication apparatus. The communication apparatus includes one or more processors. The one or more processors are configured to run a computer program or instructions. When the one or more processors execute the computer instruction or the instructions, the communication apparatus is enabled to perform the data collection and processing method according to any one of the first aspect or the possible designs of the first aspect, or perform the data collection and processing method according to any one of the second aspect or the possible designs of the second aspect, or perform the data collection and processing method according to any one of the third aspect or the possible designs of the third aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with other modules outside the communication apparatus.

According to an eighth aspect, an embodiment of this application provides a communication apparatus. The communication apparatus includes an input/output interface and a logic circuit. The input/output interface is configured to input and/or output information. The logic circuit is configured to perform the data collection and processing method according to any one of the first aspect or the possible designs of the first aspect, or perform the data collection and processing method according to any one of the second aspect or the possible designs of the second aspect, or perform the data collection and processing method according to any one of the third aspect or the possible designs of the third aspect.

According to a ninth aspect, an embodiment of this application provides a computer-readable storage medium. The computer-readable storage medium stores computer instructions or a program. When the computer instructions or the program is run on a computer, the data collection and processing method according to any one of the first aspect or the possible designs of the first aspect is performed, or the data collection and processing method according to any one of the second aspect or the possible designs of the second aspect is performed, or the data collection and processing method according to any one of the third aspect or the possible designs of the third aspect is performed.

According to a tenth aspect, an embodiment of this application provides a computer program product including computer instructions. When the computer program product is run on a computer, the data collection and processing method according to any one of the first aspect or the possible designs of the first aspect is performed, or the data collection and processing method according to any one of the second aspect or the possible designs of the second aspect is performed, or the data collection and processing method according to any one of the third aspect or the possible designs of the third aspect is performed.

According to an eleventh aspect, an embodiment of this application provides a computer program. When the computer program is run on a computer, the data collection and transmission method according to any one of the first aspect or the possible designs of the first aspect is performed, or the data collection and processing method according to any one of the second aspect or the possible designs of the second aspect is performed, or the data collection and processing method according to any one of the third aspect or the possible designs of the third aspect is performed.

According to a twelfth aspect, an embodiment of this application provides a chip, including a processor. The processor is coupled to a memory. The memory is configured to store a program or instructions. When the program or the instructions are executed by the processor, the chip is enabled to perform the data collection and processing method according to any one of the first aspect or the possible designs of the first aspect, or perform the data collection and processing method according to any one of the second aspect or the possible designs of the second aspect, or perform the data collection and processing method according to any one of the third aspect or the possible designs of the third aspect.

For technical effects brought by any design of the seventh aspect to the twelfth aspect, refer to the technical effects brought by any one of the first aspect or the possible designs of the first aspect, or refer to the technical effects brought by any one of the second aspect or the possible designs of the second aspect, or refer to the technical effects brought by any one of the third aspect or the possible designs of the third aspect. Details are not described again.

According to a thirteenth aspect, an embodiment of this application provides a communication system. The communication system may include the communication apparatus according to any one of the fourth aspect or the possible designs of the fourth aspect and the communication apparatus according to any one of the fifth aspect or the possible designs of the fifth aspect, or may include the communication apparatus according to any one of the fourth aspect or the possible designs of the fourth aspect, the communication apparatus according to any one of the fifth aspect or the possible designs of the fifth aspect, and the communication apparatus according to any one of the sixth aspect or the possible designs of the sixth aspect.

### BRIEF DESCRIPTION OF DRAWINGS

FIG. 1 is a diagram of data collection and transmission performed based on a server according to an embodiment of this application;
FIG. 2 is a diagram of a communication system according to an embodiment of this application;
FIG. 3 is a diagram of a data plane architecture according to an embodiment of this application;
FIG. 4 is a diagram of data collection and transmission according to an embodiment of this application;
FIG. 5 is a diagram of a communication apparatus according to an embodiment of this application;
FIG. 6 is a diagram of a data collection and processing method according to an embodiment of this application;
FIG. 7 is a diagram of a correspondence between a match table and an action set according to an embodiment of this application;
FIG. 8 is a diagram of a management function according to an embodiment of this application;
FIG. 9 is a diagram of a data collection and processing method according to an embodiment of this application;
FIG. 10 is a diagram of a data plane structure according to an embodiment of this application;
FIG. 11 is a diagram of a data plane structure according to an embodiment of this application;
FIG. 12 is a diagram of a data plane structure according to an embodiment of this application;
FIG. 13 is a diagram of a data plane structure according to an embodiment of this application;
FIG. 14 is a diagram of data collection and transmission according to an embodiment of this application;
FIG. 15(a) to FIG. 15(f) are diagrams of data processing configuration entry management according to an embodiment of this application;
FIG. 16 is a diagram of a data collection and processing method according to an embodiment of this application;
FIG. 17A to FIG. 17C are a diagram of a data collection and processing method according to an embodiment of this application;
FIG. 18 is a diagram of data collection and transmission according to an embodiment of this application;
FIG. 19 is a diagram of composition of a communication apparatus according to an embodiment of this application; and
FIG. 20 is a diagram of a communication apparatus according to an embodiment of this application.

### DESCRIPTION OF EMBODIMENTS

With continuous development of communication technologies, new services and new requirements emerge one after another, and network complexity further increases. Network states and behavior may be collected continuously and comprehensively, so that the network states are continuously detected and analyzed. In this way, potential network faults can be detected as early as possible, network optimization is continuously performed, network performance is improved, and quality of service is ensured.

For example, a plurality of servers may be deployed in a communication system, and processing such as network data subscription, and collection and filtering are implemented by using the servers.

Network elements (for example, network elements in a 4th-generation (4th-generation, 4G) mobile communication system (that is, a 4G network element) or 5G network elements) in the communication system may be mounted on different servers, and there is no rule to follow. During collection of network data, data collection may be implemented by sequentially logging in to each server corresponding to a network element via the file transfer protocol (file transport protocol, FTP), searching for a network element corresponding to network data to be collected, and then downloading raw signaling data generated by the network element.

For example, the network data may include one or more of the following: minimization of drive tests (minimization of drive tests, MDT) data, measurement report (measurement report, MR) data, traffic statistics (counter, or referred to as traffic statistics) data, call history record (call history record, CHR) data, radio resource management (radio resource management, RRM) data, and the like. This is not limited.

An object for collection or measurement of MDT data may be a terminal device, and support from a chip capability of the terminal device is required. An object for collection or measurement of MR data may be a terminal device or a base station (an angle of arrival of an antenna), and collection is controlled by a server. An object for collection or measurement of traffic statistics data may be a base station. An object for collection or measurement of CHR data may be a terminal device. An object for collection or measurement of data may be a terminal device or a base station. An object for collection or measurement of RRM data may be a terminal device.

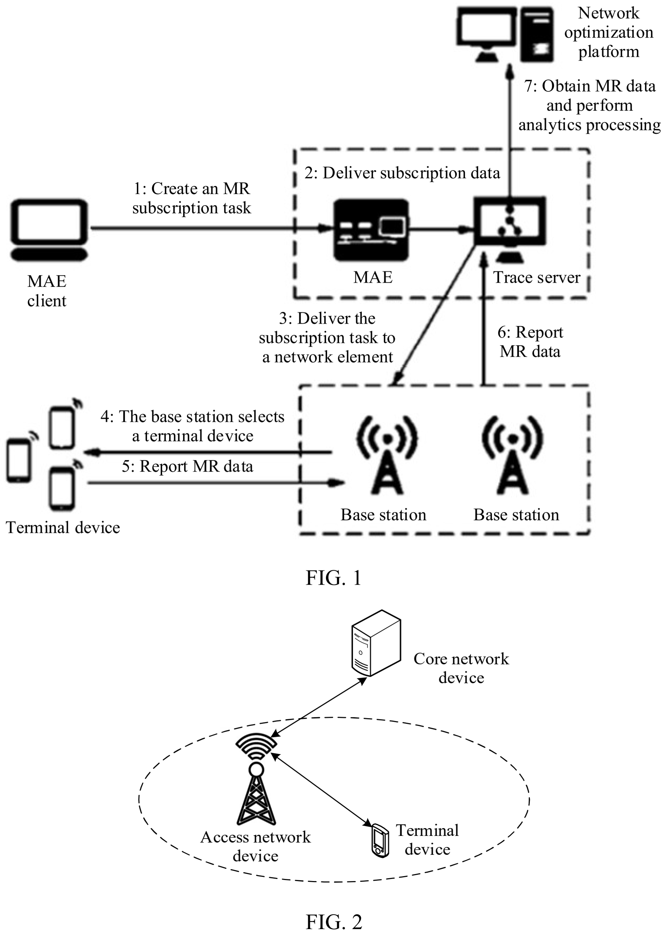

Based on the foregoing description, for example, as shown in FIG. 1, collection of MR data is used as an example. An MAE client may create an MR subscription task and deliver subscription data to an MAE. A server on which the MAE is mounted may deliver the subscription task to a network element (for example, a base station). The base station may select a corresponding terminal device based on the subscription task. The terminal device reports MR data to the base station. The base station reports the received MR data to the server. The server reports the received MR data to a network optimization platform. The network optimization platform performs analytics processing on the MR data, to detect potential network faults as early as possible. In this way, network optimization is continuously performed, network performance is improved, and quality of service is ensured.

However, operations in the foregoing data collection and processing method are relatively complex, and there is no unified data collection and processing in a data collection process. Consequently, missing or repeated data collection is likely to occur. In addition, data generated in a communication network is usually massive. For example, a single site in a wireless network may generate 1 MB CHR/MR data within 1s. For example, if 70000 sites are managed, 5767 TB data needs to be collected every day if all data is collected. Transmission and storage of the massive data incur substantial costs.

In addition, the foregoing data collection and processing method primarily focuses on the collection and transmission of the network data, and cannot implement collection and processing of typical data services such as sensing and artificial intelligence (artificial intelligence, AI) models, and cannot meet data collection and transmission requirements arising from new services and new requirements that are continuously generated with development of communication technologies.

Therefore, how to perform data collection and transmission becomes an urgent technical problem to be resolved.

To resolve the foregoing technical problem, embodiments of this application provide a data collection and processing method. In the method, a data orchestration or control apparatus may obtain a match table and an action set that are associated with a first communication apparatus; and send, to the first communication apparatus, the match table and the action set that are associated with the first communication apparatus, where the first communication apparatus is an initial data agent apparatus in a data transmission process, the match table indicates collection and/or filtering processing on data obtained from a data source, the match table includes identification information of the first communication apparatus and a service identifier, and the action set indicates one or more actions associated with the service identifier.

In embodiments of this application, because the first communication apparatus is the initial data agent apparatus in the data transmission process, the first communication apparatus may implement unified data collection and/or filtering processing at an initial stage of the data transmission process based on the match table and the action set that are delivered by the data orchestration or control apparatus, thereby avoiding missing or repeated data collection and/or filtering, reducing a data volume, reducing data transmission and storage costs, and unifying data collection and/or filtering and processing operations. In addition, the data collection and processing method in embodiments of this application is applicable to collection and/or filtering and processing of a plurality of types of data such as network data, sensing, and AI model.

The following describes implementations of embodiments of this application in detail with reference to accompanying drawings in this specification.

The data collection and processing method provided in embodiments of this application may be applied to any communication system. The communication system may be a 3GPP communication system, for example, a long term evolution (long term evolution, LTE) system, or may be a 5G mobile communication system, a new radio (new radio, NR) communication system, or a vehicle to everything (vehicle to everything, V2X) system, or may be applied to a system with LTE-5G hybrid networking, or a non-terrestrial communication network (non-terrestrial network, NTN) system, a device-to-device (device-to-device, D2D) communication system, a machine-to-machine (machine-to-machine, M2M) communication system, the Internet of Things (internet of things, IoT), and another next-generation communication system, for example, a communication system evolved after 5G, such as 6G, or may be a non-3GPP communication system. This is not limited.

The following uses FIG. 2 as an example to describe a communication system provided in an embodiment of this application.

FIG. 2 is a diagram of a communication system according to an embodiment of this application. As shown in FIG. 2, the communication system may include one or more terminal devices, an access network device, and a core network device.

In FIG. 2, the terminal device may be located in a beam/cell coverage area of the access network device, and the access network device may provide a communication service for the terminal device.

The terminal device in FIG. 2 may be a device having a wireless transceiver function or a chip or a chip system that can be disposed in the device, may allow users to access a network, and is a device configured to provide voice and/or data connectivity for users. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device in FIG. 2 may be a mobile phone (mobile phone), a tablet computer, or a computer with a wireless transceiver function. Alternatively, the terminal device may be customer premises equipment (customer premises equipment, CPE), a mobile router (mobile Wi-Fi, Mi-Fi), a subscriber station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a smart point of sale (point of sale, POS) machine, a handheld device with a wireless communication function, a computing device, a processing device connected to a wireless modem, a vehicle-mounted device, a wearable device, a smart robot, a mechanical arm, a workshop device, a terminal device in the Internet of Things, a home appliance, a virtual reality (virtual reality, VR) terminal, an augmented reality (augmented reality, AR) terminal, a wireless terminal in industrial control, a wireless terminal in autonomous driving, a wireless terminal in telemedicine, a wireless terminal in a smart grid, a wireless terminal in a smart city (smart city), a wireless terminal in a smart home (smart home), a vehicle having a vehicle-to-vehicle (vehicle-to-vehicle, V2V) communication capability, an intelligent connected vehicle, an unmanned aerial vehicle having a UAV to UAV (UAV to UAV, U2U) communication capability, a terminal device in a future network, a terminal device in a future evolved public land mobile network (public land mobile network, PLMN), or the like. This is not limited.

The access network device in FIG. 2 may be any device that is deployed in an access network and that can perform wireless communication with a terminal device, or may be a chip or a chip system that may be disposed in the device, or may be a logical node or a logical module or a function implemented by software, and may be configured to implement functions such as a radio physical control function, resource scheduling and radio resource management, radio access control, and mobility management. Specifically, the network device may be a device supporting wired access, or may be a device supporting wireless access.

For example, the access network device may include one or more access network (access network, AN) or radio access network (radio access network, RAN) nodes. The AN/RAN node may be a next-generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a wireless fidelity (wireless fidelity, Wi-Fi) access point (access point, AP), a transmission point (transmission point, TP), a transmission measurement function (transmission measurement function, TMF), a wearable device, a device functioning as a base station in machine-to-machine communication, a satellite communication device, an in-vehicle device, another access node, or the like. A specific technology and a specific device form used by the access network device are not limited in this embodiment of this application.

In another example, alternatively, the access network device may be a device including a central unit (central unit, CU) node, including a distributed unit (distributed unit, DU) node, or including a CU node and a DU node. For example, the access network device may be divided into a CU and a DU from a perspective of logical functions. Some protocol layer functions are centrally controlled by the CU, and remaining or all protocol layer functions are distributed in the DU, and the CU centrally controls the DU. Further, the central unit CU may be further divided into a control plane (CU-CP) and a user plane (CU-UP). In different systems, a CU (including a CU-CP or a CU-UP) or a DU may have different names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The core network device in FIG. 2 may include network functions (network functions, NFs) such as an access and mobility management function, a session management function, a policy control function, a user plane function, and a network data analytics function. This is not limited.

Based on the foregoing description of the communication system, while cloudification of a core network and a service-based architecture (service-based architecture, SBA) bring convenience, encryption of interfaces between NFs, encryption of all traffic transmitted between NFs, container-based NF instantiation, a trend of distributed network deployment, and the like bring great challenges to conventional hard collection solutions (for example, probing at interfaces through taps). Based on this, to overcome the challenges, a built-in soft collection solution (for example, terminals, NEs, or NFs have built-in tapping and probing functions) may be considered. To ensure security and avoid more performance losses, the built-in soft collection solution needs to be standardized, so that necessary data can be provided for a network operator through a standardized interface.

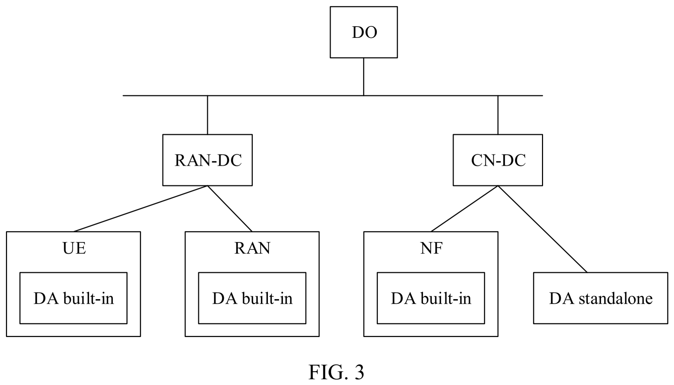

Based on this, an embodiment of this application provides a data plane architecture. As shown in FIG. 3, the data plane architecture may include a data orchestrator (data orchestrator, DO), a data controller (data controller, DC), a data agent (data agent, DA), and the like.

The DA (which may also be referred to as a soft probe) may report a data service capability of the DA to the DO/DC. The DA may be built in a terminal device, an access network device, an NF in a core network, a switch, a network element in a network management system, or the like, for example, may be referred to as a built-in DA (DA built-in), or may be referred to as a built-in soft probe. Alternatively, the DA may be independently deployed (for example, referred to as a standalone DA (DA standalone)), for example, may be independently deployed in a core network, an access network, or a network management system as an NF or a network element. Alternatively, the DA may be co-located with another service network element. This is not limited.

In a possible implementation, the DA is built in a terminal device, an access network device, an NF in the core network, a switch, a network element in the network management system, or the like, and may also be described as a DA function of the terminal device, a DA function of the access network device, a DA function of the NF in the core network, a DA function of the switch, a DA function of the network element in the network management system, or the like. This is not limited.

The DC can perform management and fine-grained orchestration on DAs in a domain. DCs may be classified into an access network DC (RAN-DC) and a core network DC (core network DC, CN-DC). The RAN-DC may be deployed in the access network, for example, deployed in a CU (or referred to as a DC function of the CU). The CN-DC may be independently deployed, or may be deployed in an NF in the core network (or referred to as a DC function of the NF).

The DO may receive a data service request, and select, based on data service capabilities reported by DAs, a corresponding DA to complete the data service request. The DO may be a standalone device, or may be deployed in some NFs (or in other words, the NFs have a DO function) in the core network, for example, may be deployed in an NF that belongs to a management plane of the core network.

In a possible implementation, the data plane architecture may further include a trust anchor agent (trust anchor agent, TAA). The TAA may be configured to complete trust data services such as authentication, authorization, and auditing.

The DO orchestrates the selected DA to perform coarse-grained cross-domain collaboration, and the DC performs fine-grained orchestration on the DA in the domain of the DC, to form a data bearer to perform corresponding data collection and/or filtering, processing, forwarding, and the like to complete a data service. One data bearer may include a plurality of data pipelines.

In a possible implementation, the DA may receive data from a data source, and the DA may further perform processing such as collection and/or filtering, fusion, preprocessing, and analytics on the data. The DA may further send processed data to a data consumer, for example, send the processed data to the data consumer through an application programming interface (application program interface, API).

The data source may be a data source device, and the data consumer may be a data destination device (for example, may be a network data analytics function (network data analysis function, NWDAF)).

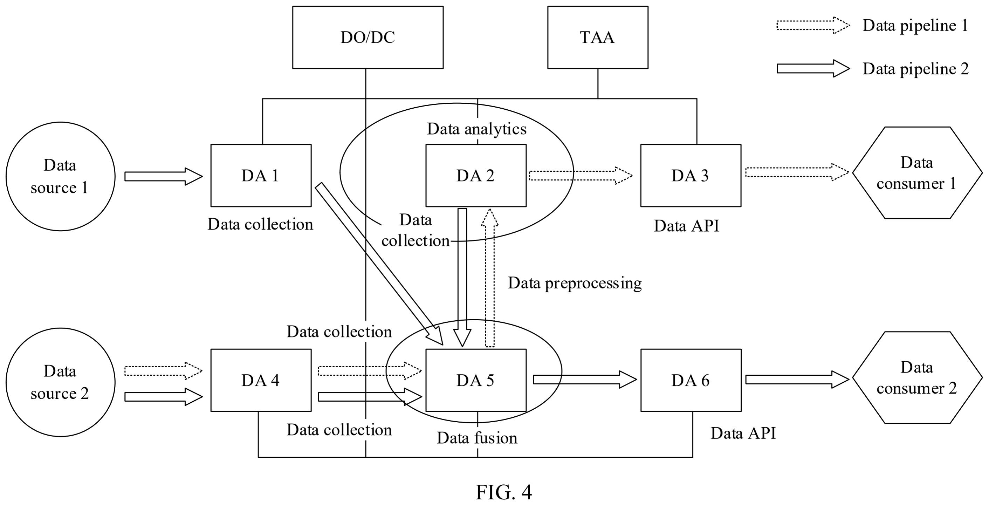

For example, as shown in FIG. 4, a data source 2 may send data to a DA 4 through a data pipeline 1; the DA 4 may collect data and send collected data to a DA 5 through the data pipeline 1; the DA 5 may perform data preprocessing on the data sent by the DA 4 and send preprocessed data to a DA 2; the DA 2 may analyze the data sent by the DA 5 and send analyzed data to a DA 3; and the DA 3 sends the analyzed data to a data consumer 1 through an API.

For another example, as shown in FIG. 4, a data source 1 may send data to a DA 1 through a data pipeline 2; the DA 1 may collect data and send collected data to the DA 5 through the data pipeline 2; the data source 2 may also send data to the DA 4 through the data pipeline 2; the DA 4 may collect data and send collected data to the DA 5 through the data pipeline 2; the DA 2 may also collect data and send collected data to the DA 5 through the data pipeline 2; the DA 5 may fuse the data from the DA 1, the DA 2, and the DA 4 and send fused data to a DA 6; and the DA 6 sends the fused data to a data consumer 2 through an API.

It should be noted that the terminal device, the access network device, the core network device, the data orchestrator, the data controller, the data agent, or the trust anchor agent in embodiments of this application may be one or more chips, or may be a system-on-a-chip (system-on-a-chip, SOC), or the like. FIG. 2 to FIG. 4 are merely examples of the accompanying drawings, and a quantity of devices included in the figures is not limited. Names of the devices and names of links in FIG. 2 to FIG. 4 are not limited. In addition to the names shown in FIG. 2 to FIG. 4, the devices and the links may have other names. This is not limited. In addition to the devices shown in FIG. 2 to FIG. 4, the communication system may further include other devices. This is not limited.

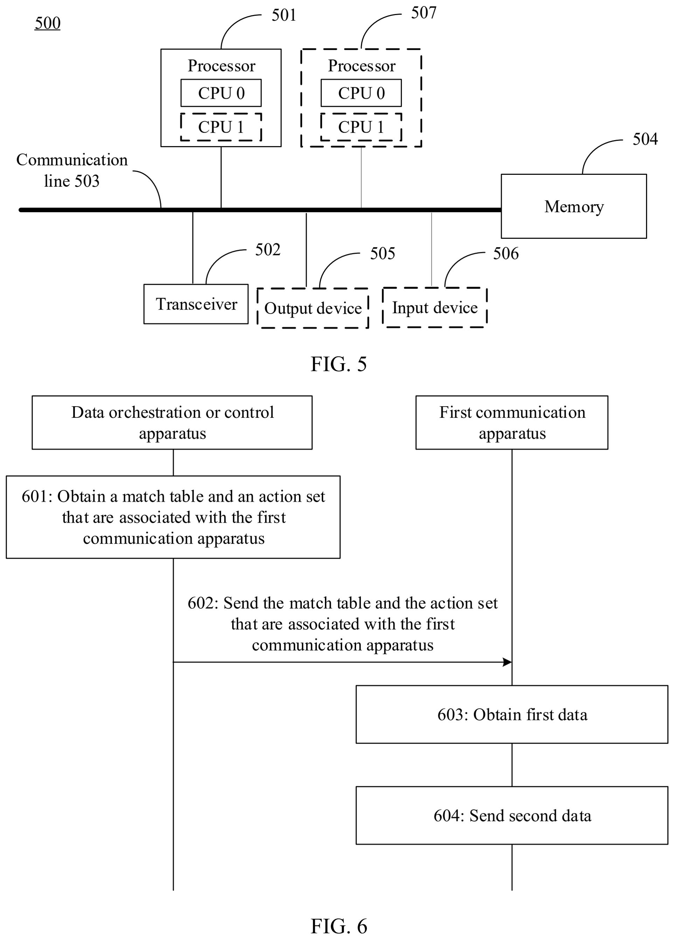

During specific implementation, the terminal device, the access network device, the core network device, the data orchestrator, the data controller, the data agent, or the trust anchor agent shown in FIG. 2 to FIG. 4 may use a composition structure shown in FIG. 5, or include components shown in FIG. 5. FIG. 5 is a diagram of composition of a communication apparatus 500 according to an embodiment of this application. The communication apparatus 500 may be a terminal device, or a chip or a system-on-a-chip in a terminal device; or may be an access network device, or a chip or a system-on-a-chip in an access network device; or may be a core network device, or a chip or a system-on-a-chip in a core network device. As shown in FIG. 5, the communication apparatus 500 includes a processor 501, a transceiver 502, and a communication line 503.

Further, the communication apparatus 500 may further include a memory 504. The processor 501, the memory 504, and the transceiver 502 may be connected through the communication line 503.

The processor 501 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 501 may alternatively be another apparatus having a processing function, for example, a circuit, a component, or a software module. This is not limited.

The transceiver 502 is configured to communicate with another device or another communication network. The another communication network may be an Ethernet, a radio access network (radio access network, RAN), a wireless local area network (wireless local area network, WLAN), or the like. The transceiver 502 may be a module, a circuit, a transceiver, or any apparatus that can implement communication.

The communication line 503 is configured to transmit information between components included in the communication apparatus 500.

The memory 504 is configured to store instructions. The instructions may be computer programs.

The memory 504 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 504 may be independent of the processor 501, or may be integrated into the processor 501. The memory 504 may be configured to store instructions, program code, some data, or the like. The memory 504 may be located inside the communication apparatus 500, or may be located outside the communication apparatus 500. This is not limited. The processor 501 is configured to execute the instructions stored in the memory 504, to implement a data collection and processing method provided in the following embodiment of this application.

In an example, the processor 501 may include one or more CPUs, for example, a CPU 0 and a CPU 1 in FIG. 5.

In a possible implementation, the communication apparatus 500 includes a plurality of processors. For example, the communication apparatus 500 may further include a processor 507 in addition to the processor 501 in FIG. 5.

In a possible implementation, the communication apparatus 500 further includes an output device 505 and an input device 506. For example, the input device 506 is a keyboard, a mouse, a microphone, a joystick, or another device, and the output device 505 is a display, a speaker (speaker), or another device.

It should be noted that the communication apparatus 500 may be a desktop computer, a portable computer, a network server, a mobile phone, a tablet computer, a wireless terminal, an embedded device, a chip system, or a device having a structure similar to that in FIG. 5. In addition, the composition structure shown in FIG. 5 does not constitute a limitation on the communication apparatus. In addition to the components shown in FIG. 5, the communication apparatus may include more or fewer components than those shown in the figure, or some components may be combined, or different component arrangements may be used.

In embodiments of this application, the chip system may include a chip or may include a chip and another discrete component.

In addition, actions, terms, and the like in embodiments of this application may be mutually referenced. This is not limited. In embodiments of this application, names of messages exchanged between devices, names of parameters in the messages, and the like are merely examples. Other names may alternatively be used during specific implementation. This is not limited.

With reference to the communication systems shown in FIG. 2 to FIG. 4, refer to FIG. 6, a data collection and processing method provided in an embodiment of this application is described. A data orchestration or control apparatus, a first communication apparatus, a second communication apparatus, a data agent apparatus, a data source, and the like described in the following embodiment may all have the components shown in FIG. 5. In embodiments of this application, processing performed by a single execution body (for example, a data orchestration or control apparatus, a first communication apparatus, a second communication apparatus, a data agent apparatus, or a data source) may also be divided among a plurality of execution bodies for execution. These execution bodies may be logically and/or physically separated, and this is not limited.

FIG. 6 is a flowchart of a data collection and processing method according to an embodiment of this application. As shown in FIG. 6, the method may include the following steps.

Step 601: A data orchestration or control apparatus obtains a match table and an action set that are associated with a first communication apparatus.

The data orchestration or control apparatus may be an apparatus having a DO function (for example, a DO is deployed in the data orchestration or control apparatus, or the data orchestration or control apparatus may be an independently deployed DO), or may be an apparatus having a DC function (for example, a DC is deployed in the data orchestration or control apparatus, or the data orchestration or control apparatus may be an independently deployed DC), or may be an apparatus having a DO function and a DC function (for example, a DO and a DC are deployed in the data orchestration or control apparatus). This is not limited. The data orchestration and management apparatus may be deployed in a network element or an NF that is related to a network management system or a control plane.

The data orchestration or control apparatus may determine one or more data agent apparatuses for a data transmission process, so that data of a data source can arrive at a destination device (for example, a data consumer) from the data source through the one or more data agent apparatuses.

The data source may be a data source device, and the data agent apparatus may be an apparatus having a DA function (for example, a DA is deployed in the data agent apparatus, or the data agent apparatus may be an independently deployed DA).

The first communication apparatus may be an initial data agent apparatus in the data transmission process, or is described as a first-hop data agent apparatus in the data transmission process.

In a possible implementation, the first communication apparatus may be the data source; or the first communication apparatus may be a next-hop data agent apparatus of the data source.

If the data source has a data agent function (for example, a DA is deployed in the data source), the data source may be determined to be the first communication apparatus. If the data source does not have a data agent function (for example, no DA is deployed in the data source), the next-hop data agent apparatus of the data source may be determined to be the first communication apparatus.

Based on the foregoing descriptions of the data orchestration or control apparatus and the first communication apparatus, the data orchestration or control apparatus may determine, for the first communication apparatus, the match table associated with the first communication apparatus.

The match table (Match Table) may indicate collection and/or filtering processing on data obtained from the data source, and the match table may include identification information of the first communication apparatus and a service identifier.

For example, the identification information of the first communication apparatus may be identification information that may be used to identify the first communication apparatus, for example, a node identifier (Node ID) of the first communication apparatus. This is not limited.

In a possible implementation, when sending the match table to the first communication apparatus, the data orchestration or control apparatus may directly send the match table to the first communication apparatus, or may send the match table to the first communication apparatus through a relay. The relay may determine, based on the identification information of the first communication apparatus in the match table, to send the match table to the first communication apparatus.

For example, the service identifier may include a data service identifier (data service ID, DSID), or the service identifier may include a data service identifier and a data pipeline identifier (data pipeline ID, DPID).

The data service identifier may indicate a data service, and the data pipeline identifier may indicate a data pipeline of the data service. One data service may correspond to one or more data pipelines, or in other words, data of the data service may be transmitted through one or more data pipelines.

In a possible implementation, the DSID may correspond to (or be associated with) one or more DPIDs. DPIDs corresponding to different DSIDs may be the same or may be different. This is not limited.

In a possible implementation, the data orchestration or control apparatus may add the service identifier to the match table, to indicate the first communication apparatus to add the service identifier to processed data, that is, an implicit indication manner is used.

Alternatively, the data orchestration or control apparatus may use explicit indication information (for example, first indication information) to indicate the first communication apparatus to add the service identifier to processed data. In a possible implementation, the data orchestration or control apparatus may further indicate, by using the first indication information, the service identifier added to the processed data. For example, the first indication information includes the service identifier.

In a possible implementation, the data orchestration or control apparatus may send the match table carrying the first indication information to the first communication apparatus, or may separately send the first indication information and the match table. This is not limited.

In a possible implementation, the match table may further include one or more of the following: collection and/or filtering time, collection and/or filtering area, node type, measurement quantity, data type, source address of data, destination address of data, quality of service (quality of service, QoS) policy, forwarding policy, network-element-level status information, port-level status information, queue-level status information, data-packet-level status information, flow-table-level status information, flow-level status information, or the like. This is not limited.

The collection and/or filtering time (which may alternatively be replaced with collection and/or filtering duration, a collection and/or filtering interval, a collection and/or filtering period, or the like) may indicate collection and/or filtering of data generated within the collection and/or filtering time. The collection and/or filtering area may indicate collection and/or filtering of data generated within the collection and/or filtering area. The node type may indicate collection and/or filtering of data generated by a node of the node type. The measurement quantity may indicate collection and/or filtering of data corresponding to the measurement quantity. The data type may indicate collection and/or filtering of data of the data type. The source address of the data may indicate collection and/or filtering of the data of the source address. The destination address of the data may indicate collection and/or filtering of the data of the destination address. The quality of service policy may indicate collection and/or filtering of data or a data flow of specific QoS. The forwarding policy may indicate forwarding based on source routing or forwarding based on an IP header. The network-element-level status information may indicate collection and/or filtering of the network-element-level status information. The port-level status information may indicate collection and/or filtering of the port-level status information. The queue-level status information may indicate collection and/or filtering of the queue-level status information. The data-packet-level status information may indicate collection and/or filtering of the data-packet-level status information. The flow-table-level status information may indicate collection and/or filtering of the flow-table-level status information. The flow-level status information may indicate collection and/or filtering of the flow-level status information. In this way, collection and/or filtering of data of different granularities are/is implemented.

It may be understood that filtering in this embodiment of this application may be retaining data that meets a parameter shown in the match table, or may be removing data that meets a parameter shown in the match table. This is not limited.

For example, the measurement quantity may be an MDT intra-frequency measurement event: level values of a serving cell and a neighboring cell, and can also carry location information of a terminal device that reports the measurement, and WLAN and Bluetooth (Bluetooth) related measurement information. Alternatively, it may be the number of times that a downlink rate of adaptive multirate (adaptive multiple rate, AMR) voice is increased in a cell.

In a possible implementation, each parameter in the match table may be indicated in an explicit indication manner, or may be indicated in an implicit indication manner.

For example, the collection and/or filtering time is used as an example. The collection and/or filtering time may be indicated by using the match table, to explicitly indicate the first communication apparatus to collect and/or filter the data generated within the collection and/or filtering time. Alternatively, a non-collection and/or non-filtering time may be indicated by using the match table, to implicitly indicate the first communication apparatus to collect and/or filter data generated within a time other than the non-collection and/or non-filtering time. In other words, the collection and/or filtering time may be the time other than the non-collection and/or non-filtering time. Descriptions of other parameters in the match table are similar to related descriptions of the collection and/or filtering time, and details are not described again.

The match table may support collection and/or filtering from a file (for example, after data collection and/or filtering processing is performed based on the match table, file-type data is generated), collection and/or filtering from an event (for example, data collection and/or filtering processing is triggered based on an event, and event-type data is generated), and fine-grained data collection and/or filtering from a network element level to a flow level, thereby meeting requirements for fine-grained on-path data processing in a data bearer.

Based on the foregoing descriptions of the data orchestration or control apparatus, the first communication apparatus, and the match table, the data orchestration or control apparatus may further determine, for the first communication apparatus, the action set (Action Set) associated with the first communication apparatus.

The action set may indicate one or more actions associated with the service identifier. The service identifier may be a service identifier in the match table.

For example, the one or more actions associated with the service identifier may include one or more of the following: preprocessing (such as cleaning, fusion, and trimming), desensitization and de-identification, verification, security, storage, forwarding, text generation, data fusion, or analytics. This is not limited.

In a possible implementation, the action set may include the service identifier, identification information of the data agent apparatus, and an action execution sequence.

The identification information of the data agent apparatus may be identification information of the data agent apparatus associated with the action set. The action set associated with the first communication apparatus is used as an example. The identification information of the data agent apparatus in the action set may be the identification information of the first communication apparatus. The action execution sequence may be an execution sequence of the one or more actions associated with the service identifier.

In a possible implementation, the action set may further include remark information, and the remark information may be a description of the action execution sequence.

For example, as shown in Table 1, an action set may include a service identifier, identification information of a data agent apparatus, an action execution sequence, and remark information.

**Table 1**

| Service identifier | Identification information of a data agent apparatus | Action execution sequence | Remark information |
|---|---|---|---|
| DSID1/DPID1 | DA_ID1 | 00000011 → 00010011 | Streaming data collection → data fusion |
| DSID1/DPID2 | DA_ID1 | 00010100 → 00100001 | Removing redundancy (from received data) → storing |
| DSID2/DPIDx, DSID2/DPIDy | DA_ID1 | 00010011 | Fusion (of received data) |

The DSID1 and the DSID2 may correspond to different data services (or data bearers), or in other words, a data bearer 1 of the DSID1 may provide a data service for a data service 1, and a data bearer 2 of the DSID2 may provide a data service for a data service 2. The data bearer 1 may include two data pipelines DPID1 and DPID2, and the data bearer 2 may include two data pipelines DPIDx and DPIDy.

For example, an action in the action set is indicated by using eight bits. For data whose service identifier is the DSID1/DPID1, actions performed by the first communication apparatus (for example, DA_ID1) are streaming data collection (that is, 00000011) and data fusion (that is, 00010011). For data whose service identifier is the DSID1/DPID2, actions performed by the first communication apparatus (for example, DA_ID1) are: removing redundancy (that is, 00010100) and storing (that is, 00100001). For data whose service identifiers are the DSID2/DPIDx and the DSID2/DPIDy, an action performed by the first communication apparatus (for example, DA_ID1) is data fusion (that is, 00010011).

In a possible implementation, the data orchestration or control apparatus may add the service identifier to the action set, to indicate the first communication apparatus to add the service identifier to the processed data.

Alternatively, the data orchestration or control apparatus may use explicit indication information (for example, the first indication information) to indicate the first communication apparatus to add the service identifier to the processed data. In a possible implementation, the data orchestration or control apparatus may further indicate, by using the first indication information, the service identifier added to the processed data. For example, the first indication information includes the service identifier.

In a possible implementation, the data orchestration or control apparatus may send the action set carrying the first indication information to the first communication apparatus, or may separately send the first indication information and the action set. This is not limited.

In a possible implementation, when sending the action set to the first communication apparatus, the data orchestration or control apparatus may directly send the action set to the first communication apparatus, or may send the action set to the first communication apparatus through the relay. The relay may determine, based on the identification information of the data agent apparatus (that is, the identification information of the first communication apparatus) in the action set, to send the action set to the first communication apparatus.

Based on the foregoing descriptions of the match table and the action set, in a possible implementation, the data orchestration or control apparatus may determine one or more match tables and one or more action sets for the first communication apparatus, that is, the first communication apparatus is associated with the one or more match tables and the one or more action sets.

Each match table may be associated with one or more action sets, and each action set may also be associated with one or more match tables.

In a first possible design, when the first communication apparatus is associated with one match table and one action set, the service identifier in the match table may include one DSID, and the action set may be an action set associated with the service identifier including the DSID. Alternatively, the service identifier in the match table may include one DSID and one DPID, and the action set may be an action set associated with the service identifier including the DSID and the DPID.

In a second possible design, one match table may be associated with a plurality of action sets, to indicate that for a plurality of data services, collection and/or filtering processing performed by the first communication apparatus based on the match table is the same, and different processing actions are subsequently performed based on different action sets, so that one-time collection and/or filtering can be applied multiple times, thereby avoiding repeated collection and/or filtering.

For example, when data collection and/or filtering requirements of a plurality of service requirements from different users are the same (or in other words, for different applications, if event-level parameters of a same event of a same network element are combined, or if cell-level parameters of a same cell of a same network element are combined), the plurality of service requirements may be associated with a same match table. The match table includes a plurality of different service identifiers associated with the plurality of service requirements, and different service identifiers may be associated with different action sets. In this way, the match table is associated with a plurality of action sets.

The service requirement may be a service requirement of a data service.

For example, the service identifier includes a DSID and a DPID. The service identifier in the match table may include one DSID and a plurality of DPIDs, and different action sets are associated with a same DSID and different DPIDs. For example, a service identifier associated with an action set 1 may include a DSID and the DPID1, and a service identifier associated with an action set 2 may include a DSID and the DPID2.

In a third possible design, one action set may be associated with a plurality of match tables, to indicate that one data service may have a plurality of data sources. The first communication apparatus may perform collection and/or filtering processing on data by using different match tables for different data sources, and subsequently perform, based on the same action set, a same processing action (such as fusion or concatenation) on data obtained based on different match tables, so that data can be obtained from a plurality of data sources, to avoid missing data collection and simplify a data processing operation by using the same action set for processing.

For example, for a user service requirement, different match tables may be configured for the service requirement, to obtain, from a plurality of data sources, data corresponding to the service requirement. Service identifiers in the match tables may be the same (for example, a same DSID, or a same DSID and a same DPID), to associate with a same action set.

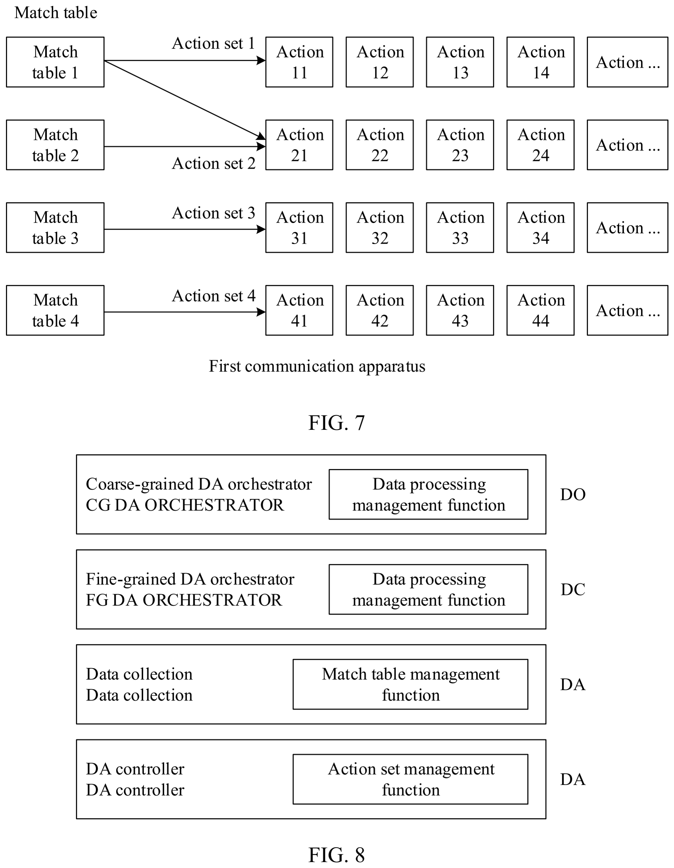

Based on the foregoing three possible designs, for example, as shown in FIG. 7, a match table 1 may be associated with the action set 1 and the action set 2, so that one-time collection and/or filtering can be applied multiple times. A match table 2 may also be associated with the action set 2, so that a same processing action is performed on data obtained based on the match table 1 and data obtained based on the match table 2. A match table 3 may be associated with an action set 3, so that data obtained based on the match table 3 is processed by using the action set 3. A match table 4 may be associated with an action set 4, so that data obtained based on the match table 4 is processed by using the action set 4.

Based on the foregoing descriptions of the match table and the action set, in a possible implementation, the data orchestration or control apparatus may obtain a service requirement, and determine, for the first communication apparatus based on the obtained service requirement, the match table and the action set that are associated with the first communication apparatus.

The service identifier in the match table and the action set may indicate the service requirement.

In a possible implementation, the data orchestration or control apparatus may further determine a data source based on the service requirement. The data source may be a source device of data corresponding to the service requirement.

The data source may have a data agent function, or may not have a data agent function. This is not limited.

In a possible implementation, the data collected from the data source may be streaming data, file-type data, event-type data, or the like. This is not limited. For streaming data, both an uplink and a downlink may serve as data sources.

In a possible implementation, the data source may support data collection in a plurality of modes such as a subscription mode, a request/response mode, and an event-triggered mode. This is not limited.

In a possible implementation, the data orchestration or control apparatus may further receive capability information from one or more data agent apparatuses, and determine the first communication apparatus based on the service requirement and the capability information of the one or more data agent apparatuses.

The capability information includes one or more of the following: a data collection and/or filtering capability, a preprocessing capability, an analytics capability, and a storage capability.

For example, the data collection and/or filtering capability may include one or more of the following: collection and/or filtering time, collection and/or filtering area, measurement quantity, data type, source address of data, destination address of data, quality of service policy, network-element-level status information, port-level status information, queue-level status information, data-packet-level status information, flow-table-level status information, flow-level status information, or the like. This is not limited.

In a possible implementation, when determining the match table and the action set for the first communication apparatus based on the service requirement, the data orchestration or control apparatus may also determine the match table and the action set with reference to the capability information of the one or more data agent apparatuses.

In a possible implementation, the match table and the action set may also be referred to as data processing, a data processing configuration, a processing mode, a processing route, a transmission route, a transmission mode, an operation route, an action route, or the like. This is not limited.

In a possible implementation, a data processing management function may be added to the data orchestration or control apparatus, and the data orchestration or control apparatus may determine the match table and the action set for the first communication apparatus based on the data processing management function.

For example, as shown in FIG. 8, an example in which the data orchestration or control apparatus includes a DO is used. A data processing management function may be added to a coarse-grained DA orchestrator (coarse-grained DA orchestrator, CG DA Orchestrator) in the DO. An example in which the data orchestration or control apparatus includes a DC is used. A data processing management function may be added to a fine-grained DA orchestrator (fine-grained DA orchestrator, FG DA Orchestrator) in the DC.

In a possible implementation, a match table management function may be added to the first communication apparatus, and configured to receive and manage the match table delivered by the data orchestration or control apparatus.

For example, as shown in FIG. 8, a match table management function may be added to a data collection (Data collection) function in the DA of the first communication apparatus.

In a possible implementation, an action set management function may be added to the first communication apparatus, and configured to receive and manage the action set delivered by the data orchestration or control apparatus.

For example, as shown in FIG. 8, an action set management function may be added to a DA controller (DA controller) function in the DA of the first communication apparatus.

Step 602: The data orchestration or control apparatus sends, to the first communication apparatus, the match table and the action set that are associated with the first communication apparatus; and correspondingly, the first control apparatus receives, from the data orchestration or control apparatus, the match table and the action set that are associated with the first communication apparatus.

In a possible implementation, the data orchestration or control apparatus may send, to the first communication apparatus, a data forwarding entry carrying the match table and the action set that are associated with the first communication apparatus.

The data forwarding entry may indicate address information of a next-hop communication apparatus of the first communication apparatus.

For example, when the data orchestration or control apparatus determines a plurality of data agent apparatuses for the data transmission process, the next-hop communication apparatus of the first communication apparatus may be a non-initial data agent apparatus (for example, the following second communication apparatus) in the data transmission process, or the first communication apparatus may communicate with the next-hop data agent apparatus through a relay. In this case, the next-hop communication apparatus of the first communication apparatus may be the relay. Alternatively, when the data orchestration or control apparatus determines a data agent apparatus (that is, the first communication apparatus) for the data transmission process, the next-hop communication apparatus of the first communication apparatus may be a destination device (such as a data consumer), or the first communication apparatus may communicate with a destination device through a relay. In this case, the next-hop communication apparatus of the first communication apparatus may be the relay.

In a possible implementation, the data orchestration or control apparatus may further send the first indication information to the first communication apparatus, where the first indication information may indicate the service identifier added to the processed data. The first communication apparatus may add, based on the first indication information, the service identifier indicated by the first indication information to the processed data.

Step 603: The first communication apparatus obtains first data.

The first data is data obtained by performing, based on the match table, collection and/or filtering processing on data corresponding to the service requirement, and the first data may include the service identifier.

In a possible implementation, the first communication apparatus may perform, based on the match table, collection and/or filtering processing on the data corresponding to the service requirement, and add the service identifier to a packet header of the processed data, to obtain the first data.

In a possible implementation, the first data may be streaming data or file-type data. This is not limited.

In a first possible design, if the first communication apparatus is the data source, the first communication apparatus may receive a collection instruction from the data orchestration or control apparatus, and obtain the first data according to the collection instruction.

The first communication apparatus may perform collection and/or filtering processing on the data according to the collection instruction and based on the match table, and add the service identifier to the processed data, to obtain the first data.

In a possible implementation, the collection instruction may include the service identifier, and the collection instruction may instruct the data source to add the service identifier to the collected data.

The first communication apparatus may add, according to the collection instruction, the service identifier to the data obtained by performing collection and/or filtering processing, to obtain the first data.

In a second possible design, if the first communication apparatus is the data source, the first communication apparatus may alternatively obtain the first data by performing data collection and/or filtering based on the match table.

When the match table includes the collection and/or filtering time, the first communication apparatus may perform collection and/or filtering processing on the data based on the collection and/or filtering time and based on the match table, and add the service identifier to the processed data, to obtain the first data.

In a third possible design, if the first communication apparatus is the next-hop data agent apparatus of the data source, the first communication apparatus may forward, to the data source, the collection instruction delivered by the data orchestration or control apparatus, or the first communication apparatus may send the collection instruction to the data source based on the match table (for example, the collection and/or filtering time). The data source may collect the data according to the collection instruction, and send the collected data to the first communication apparatus. The first communication apparatus may perform, based on the match table, collection and/or filtering processing on the collected data sent by the data source, and add the service identifier to the processed data, to obtain the first data.

In a possible implementation, the collection instruction may include the service identifier, and the collection instruction may instruct the data source to add the service identifier to the collected data.

When the collection instruction includes the service identifier, the data source may add the service identifier to the collected data, and send the collected data including the service identifier to the first communication apparatus.

In a possible implementation, the collection instruction may further include collection parameters such as collection time, collection area, data type, source address of data, and destination address of data. The data source may perform corresponding data collection according to the collection instruction.

In a possible implementation, when the collected data includes the service identifier, the data obtained by the first communication apparatus by performing, based on the match table, collection and/or filtering processing on the collected data sent by the data source may include the service identifier, and the data obtained by performing the collection and/or filtering processing may be the first data.

Step 604: The first communication apparatus sends second data.

The second data may be data obtained by processing the first data based on the service identifier and the action set, and the second data includes the service identifier.

After obtaining the first data, the first communication apparatus may determine, based on the service identifier of the first data, the action set associated with the identification information, and then process the first data based on the action set, to obtain the second data.

In a possible implementation, the first communication apparatus may obtain a plurality of pieces of first data. It is assumed that the plurality of pieces of first data have a same data service identifier and different data pipeline identifiers. If the action set of the first communication apparatus includes data fusion, the first communication apparatus may fuse the plurality of pieces of first data.

In a possible implementation, for a plurality of pieces of first data that are of a same service requirement and that are from different data sources, if the plurality of pieces of first data follow different paths after the first communication apparatus, data fusion may be set in the action set of the first communication apparatus, to indicate the first communication apparatus to fuse the plurality of pieces of third data, or data fusion may not be set in the action set of the first communication apparatus, and the first communication apparatus may not fuse the plurality of pieces of first data. Alternatively, if the plurality of pieces of first data follow a same path after the first communication apparatus, data fusion may be set in the action set of the first communication apparatus, to indicate the first communication apparatus to fuse the plurality of pieces of first data.

In a possible implementation, the second data may be streaming data or file-type data. This is not limited.

For example, after the data reaches a preset size or the data is accumulated for a preset time, the first communication apparatus may write the data into a file, to obtain the file-type data (that is, the second data). Alternatively, the first communication apparatus may directly send the streaming data (that is, the second data) when generating the streaming data based on the action set.

In a possible implementation, the first communication apparatus may determine the next-hop communication apparatus of the first communication apparatus based on the data forwarding entry, and send the second data to the next-hop communication apparatus.

Based on the method shown in FIG. 6, because the first communication apparatus is the initial data agent apparatus in the data transmission process, the first communication apparatus may implement unified data collection and/or filtering processing at an initial stage of the data transmission process based on the match table and the action set that are delivered by the data orchestration or control apparatus, thereby avoiding missing or repeated data collection and/or filtering, reducing a data volume, reducing data transmission and storage costs, and unifying data collection and/or filtering and processing operations. In addition, the data collection and processing method in this embodiment of this application is applicable to collection and/or filtering and processing of a plurality of types of data such as network data, sensing, and AI model.

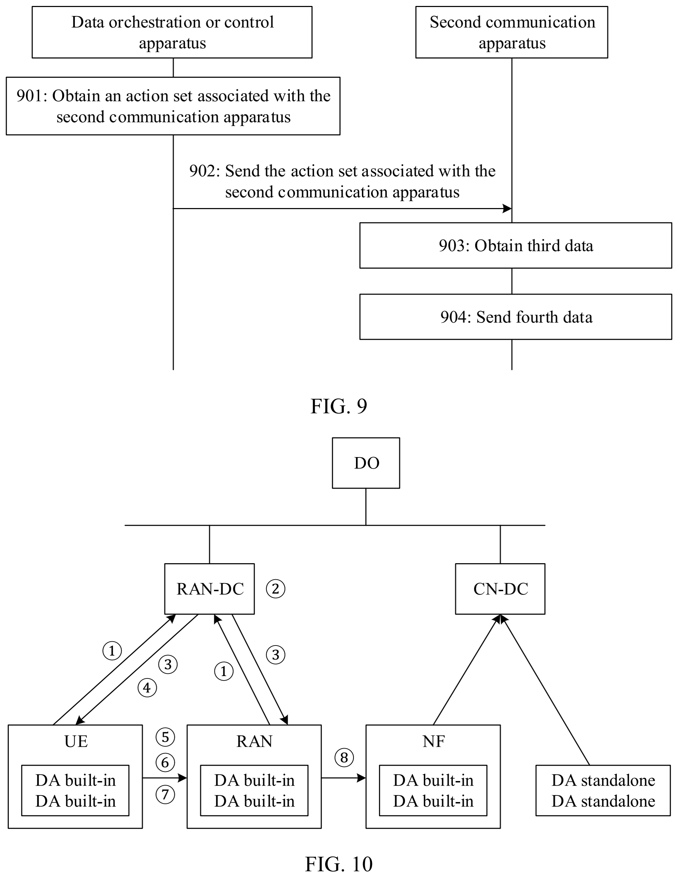

Similar to sending, by the data orchestration or control apparatus, the match table and the action set to the first communication apparatus in FIG. 6, when the data orchestration or control apparatus determines a plurality of data agent apparatuses for a data transmission process, as shown in FIG. 9, the data orchestration or control apparatus may further send, to each non-initial data agent apparatus (that is, a second communication apparatus), an action set associated with the respective non-initial data agent apparatus.

FIG. 9 shows a data collection and processing method according to an embodiment of this application. As shown in FIG. 9, the method may include the following steps.

Step 901: A data orchestration or control apparatus obtains an action set associated with a second communication apparatus.

The second communication apparatus may be a non-initial data agent apparatus in a data transmission process, or may be referred to as a data agent apparatus other than a first communication apparatus in a data transmission process. For the description of the action set, refer to the description of the action set in FIG. 6. Details are not described again.

In a possible implementation, the data orchestration or control apparatus may determine one or more second communication apparatuses based on a service requirement and capability information of a plurality of data agent apparatuses.

In a possible implementation, the data orchestration or control apparatus may further determine, based on the service requirement, an action set associated with the one or more second communication apparatuses.

In a possible implementation, when determining the action set for the second communication apparatus based on the service requirement, the data orchestration or control apparatus may also determine the action set with reference to capability information of one or more data agent apparatuses.

In a possible implementation, the action set associated with the second communication apparatus may be one or more action sets.

In a possible implementation, the action set may also be referred to as data processing, a data processing configuration, a processing mode, a processing route, a transmission route, a transmission mode, an action route, or the like. This is not limited.

In a possible implementation, an action set management function may be added to the second communication apparatus, and configured to receive and manage the action set delivered by the data orchestration or control apparatus.

For example, as shown in FIG. 8, an action set management function may be added to a DA controller (DA controller) function in a DA of the second communication apparatus.

In this embodiment of this application, data processing may include a match table and an action set, but the match table and the action set may be decoupled. For the first communication apparatus, data processing may include a match table and an action set. For the second communication apparatus, data processing may include an action set, and does not include a match table.

In addition, the action set in this embodiment of this application may represent a series of actions from a data source to a destination device, that is, an action of on-path processing to be performed by each data agent apparatus (such as the first communication apparatus and the second communication apparatus) in the data transmission process. The data orchestration or control apparatus may configure one or more action sets for each data agent apparatus in the data transmission process.

Step 902: The data orchestration or control apparatus sends, to the second communication apparatus, the action set associated with the second communication apparatus.

In a possible implementation, the data orchestration or control apparatus may send, to the second communication apparatus, a data forwarding entry carrying the action set associated with the second communication apparatus.

The data forwarding entry may include address information of a next-hop communication apparatus of the second communication apparatus.

For example, the next-hop communication apparatus of the second communication apparatus may be another second communication apparatus in the data transmission process, or may be a relay between the second communication apparatus and another second communication apparatus, or may be the destination device, or may be a relay between the second communication apparatus and the destination device. This is not limited.

In a possible implementation, the data orchestration or control apparatus may further send first indication information to the second communication apparatus, where the first indication information may indicate a service identifier added to processed data. The second communication apparatus may add, based on the first indication information, the service identifier indicated by the first indication information to the processed data.

Step 903: The second communication apparatus receives third data from a previous-hop data agent apparatus.

The third data may be data processed by the previous-hop data agent apparatus based on an action set associated with the previous-hop data agent apparatus, and the third data may include a service identifier.

In a possible implementation, the third data may be streaming data or file-type data. This is not limited.

Step 904: The second communication apparatus sends fourth data.

The fourth data may be data obtained by the second communication apparatus by processing the third data based on the service identifier and the action set associated with the second communication apparatus, and the fourth data may include the service identifier.

The second communication apparatus may determine, based on the service identifier in the third data, the action set associated with the service identifier, and then process the third data based on the action set, to obtain the fourth data.

In a possible implementation, the second communication apparatus may obtain a plurality of pieces of third data. It is assumed that the plurality of pieces of third data include a same data service identifier and different data service identifiers. If the action set of the second communication apparatus includes data fusion, the second communication apparatus may fuse the plurality of pieces of third data.

In a possible implementation, for a plurality of pieces of third data that are of a same service requirement and that are from different data sources, if the plurality of pieces of third data follow different paths after the second communication apparatus, data fusion may be set in the action set of the second communication apparatus, to indicate the second communication apparatus to fuse the plurality of pieces of third data, or data fusion may not be set in the action set of the second communication apparatus, and the second communication apparatus may not fuse the plurality of pieces of third data. Alternatively, if the plurality of pieces of third data follow a same path after the second communication apparatus, data fusion may be set in the action set of the second communication apparatus, to indicate the second communication apparatus to fuse the plurality of pieces of third data.

In a possible implementation, the fourth data may be streaming data or file-type data. This is not limited.

For example, after the data reaches a preset size or the data is accumulated for a preset time, the second communication apparatus may write the data into a file, to obtain the file-type data (that is, the fourth data). Alternatively, the second communication apparatus may directly send the streaming data (that is, the fourth data) when generating the streaming data based on the action set.

In a possible implementation, the second communication apparatus may determine the next-hop communication apparatus of the second communication apparatus based on the data forwarding entry, and send the fourth data to the next-hop communication apparatus.

Based on the methods shown in FIG. 6 to FIG. 9, the first communication apparatus may perform fine-grained collection and precise filtering on data at the data source based on the match table, remove redundant, erroneous, and duplicate data, and perform data fusion, pruning, and the like, to obtain accurate and high-quality data, so that the first communication apparatus and/or the second apparatus can implement on-path processing based on the accurate and high-quality data during subsequent data forwarding.

In addition, during data transmission, the first communication apparatus and/or the second communication apparatus may perform corresponding data processing such as data desensitization and de-identification, preprocessing, storage, fusion, and analytics based on the action set. This meets a requirement for keeping sensitive data locally, while achieving data reduction, saving bandwidth, reducing latency, implementing on-path processing in a data bearer, and fulfilling a requirement of a communication system for distributed data and computing power and a requirement for privacy protection of data.

Compared with a point-to-point session mechanism (for example, a protocol data unit (protocol data unit, PDU) session mechanism) that cannot meet a data processing requirement such as network AI or integrated sensing and communication (integrated sensing and communication, ISAC), in this embodiment of this application, the data orchestration or control apparatus may determine, based on the service requirement and capability information of each data agent apparatus, the first communication apparatus and/or the second communication apparatus participating in data transmission. In other words, any network element and terminal device may serve as a starting point or an ending point of data transmission, and a flexible on-demand routing mechanism is implemented to support beyond communication services (such as 6G services) and support any topology for data bearing.

Based on the methods shown in FIG. 6 to FIG. 9, the following describes in detail a data collection and processing method by using a data plane structure shown in FIG. 10 as an example.

Step ①: Each data agent apparatus (that is, a network element including a DA) in a communication system reports capability information to a data orchestration or control apparatus (for example, a RAN-DC).

Step ②: The data orchestration or control apparatus (for example, the RAN-DC) selects, based on the capability information and a service requirement, a data source (for example, UE including a DA) and a data agent apparatus (for example, UE including a DA and a RAN including a DA) for data transmission, creates a match table and an action set, and allocates a corresponding service identifier.

The data orchestration or control apparatus may determine a match table for a data source including a DA, and determine, for each data agent apparatus performing data transmission, an action set associated with the respective data agent apparatus.

Step ③: The data orchestration or control apparatus sends, to the data source including the DA, the match table and action set that are associated with the data source, and sends, to each data agent apparatus except the data source, the action set associated with the respective data agent apparatus, to complete configuration of a collection task.

Step ④: The data orchestration or control apparatus (for example, the RAN-DC) sends a collection instruction to the data source including the DA.

Step ⑤: The data source collects data according to the collection instruction.

Step ⑥: Based on the deployed DA, the data source performs a collection and/or filtering operation the data based on the match table, and adds the corresponding service identifier.

Step ⑦: The data source determines, based on the service identifier, the action set associated with the service identifier, and performs corresponding action processing based on the action set.

Step ⑧: The data source sends, through each data agent apparatus in a data transmission process, processed data to a destination address (for example, an NF including a DA) corresponding to the service requirement.

Each data agent apparatus in the data transmission process may process and send received data based on the action set associated with the respective data agent apparatus.

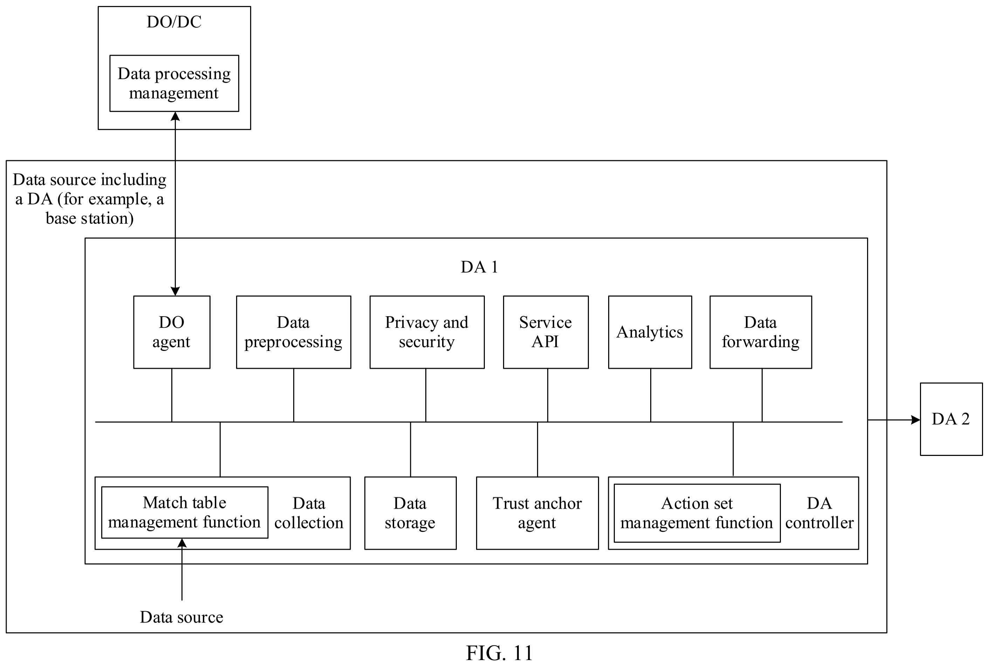

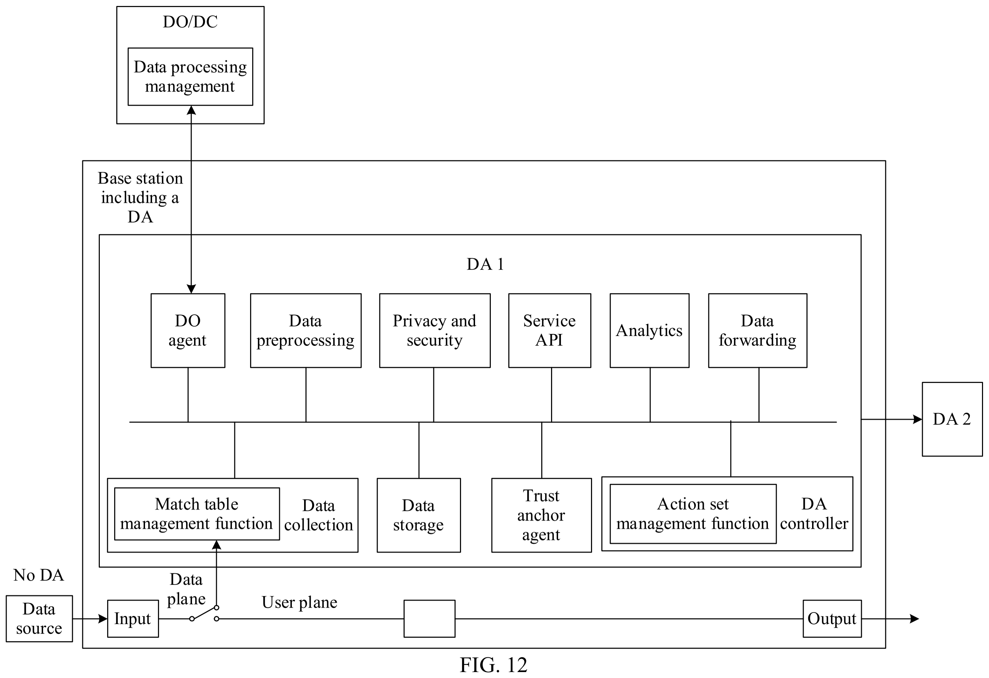

Based on the data collection and processing methods shown in FIG. 6 to FIG. 10, in a possible implementation, with reference to the following FIG. 11 and FIG. 12, data collection performed by a data source is described in detail by using an example in which the data source includes a DA and an example in which the data source does not include a DA.

As shown in FIG. 11, an example in which a data source includes a DA 1 is used. The DA 1 may include functional modules such as a DO agent (DO Agent), data preprocessing (Data Preprocessing), privacy and security (Privacy & Security), a service API (Service API), analytics (Analytics), data forwarding (Data Forwarding), data collection (Data Collection), data storage (Data storage), a trust anchor agent (Trust Anchor Agent), and a DA controller (DA controller). The data collection may include a match table management function, and the DA controller may include an action set management function.

For example, when a data source such as a base station has a built-in DA 1, as shown in FIG. 11, the DA 1 may receive a match table and an action set that are delivered by a DO/DC (for example, a data processing management function), and after receiving a collection instruction, directly collect data in the base station. Filtering is performed on the collected data based on the match table and the match rule to obtain required data, a corresponding service identifier is added to the required data, and then a subsequent corresponding action is performed based on the action set associated with the service identifier.

As shown in FIG. 12, when a data source such as a terminal device has no built-in DA, as shown in FIG. 12, assuming that a base station accessed by the terminal device has a built-in DA, a DO/DC may deliver a match table and an action set to the built-in DA of the base station. When the data source receives a collection instruction, the data source may upload corresponding data (for example, MDT data) to the base station. A switch may be set at an entry of the base station. When receiving data, the base station may determine, based on information (for example, whether the data includes a session ID) in the data, whether the data is conventional session service data or non-user-plane service data. If the data is the conventional session service data, data transmission may be performed through a conventional user plane. If the data is the non-user-plane service data, data transmission may be performed through a data plane.

When the non-user-plane service data is transmitted through the data plane, the non-user-plane service data may be processed based on the match table, required data is obtained through filtering, a corresponding service identifier is added, and then a subsequent corresponding action is performed based on an action set associated with the service identifier.

The switch may be set at the entry point of the base station, and when no match table is required, the switch may be directly turned off, thereby reducing impact on communication performance.

In a possible implementation, if data uploaded by the terminal device includes the session ID, the base station may determine that the data is the conventional session service data. If data uploaded by the terminal device does not include the session ID, the base station may determine that the data is the non-user-plane service data.

Based on the foregoing descriptions of FIG. 11 and FIG. 12, in a possible implementation, a data service orchestrated by a data orchestration or control apparatus (such as a DO/DC) may be completed by a data bearer. One data bearer may include a plurality of data pipelines, one data pipeline may include a plurality of data agent apparatuses (such as DAs), an action sequence configured by the data orchestration or control apparatus may be completed by the plurality of data agent apparatuses, and each data agent apparatus may perform one or more corresponding action sequences based on an action set associated with the respective data agent apparatus. In the examples in FIG. 11 and FIG. 12, only some action sequences implemented inside the DA are reflected, and the action sequences are implemented in a service-based manner.

In a possible implementation, the action set in each data agent apparatus is managed by the DA controller, and may be implemented in two optional solutions: ① The action set is preconfigured. ② The action set is implemented in the service-based manner.

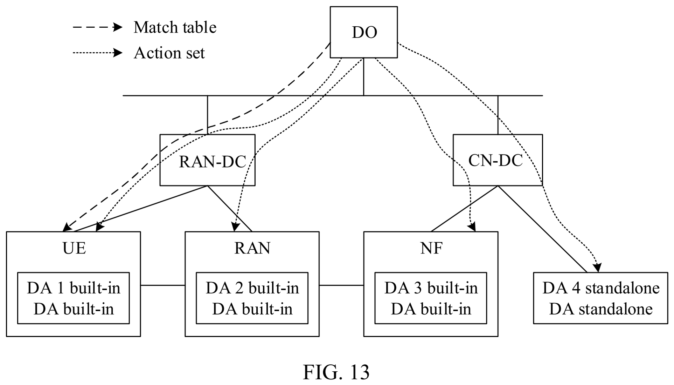

Based on the methods shown in FIG. 6 to FIG. 12, a process in which a data orchestration or control apparatus delivers a match table and an action set to a first communication apparatus and a second communication apparatus is described in detail below with reference to FIG. 13.

As shown in FIG. 13, a data orchestration or control apparatus (for example, a DO, a RAN-DC, or a CN-DC) may send a match table to a data source with a built-in DA 1, and send, to all data agent apparatuses (for example, the data source with the built-in DA 1, a RAN with a built-in DA 2, an NF with a built-in DA 3, and an independently deployed DA 4) in a data bearer established for a data service, action sets associated with the respective data agent apparatuses.

For example, an example in which the data orchestration or control apparatus determines, based on a service requirement of the data service, that a data bearer of the data service is shown in the following Table 2 is used. A data service identifier of the service requirement may be a DSID1, the data bearer may include a data pipeline DPID1, and the DPID1 may include three data agent apparatuses (DA 1, DA 2, and DA 3). Identification information of and an action performed by each data agent apparatus may be shown in the following Table 2.

**Table 2**

| Service identifier | Identification information of a data agent apparatus | Action execution sequence | Remark information |
|---|---|---|---|
| DSID1/DPID1 | DA_ID1 | Data collection → data preprocessing | Action set of the DA 1 |
| DSID1/DPID1 | DA_ID2 | Forwarding | Action set of the DA 2 |
| DSID1/DPID1 | DA_ID3 | Analytics | Action set of the DA 13 |

Based on the foregoing data bearer, the match table may include identification information (DA_ID1) of the first communication apparatus and a service identifier (DSID1/DPID1).

In a possible implementation, the match table may further include one or more of the following: collection and/or filtering time, node type (such as a terminal device), level value of a serving cell and level value of a neighboring cell, sensing data, and source (DA_1)/destination address (DA_3).

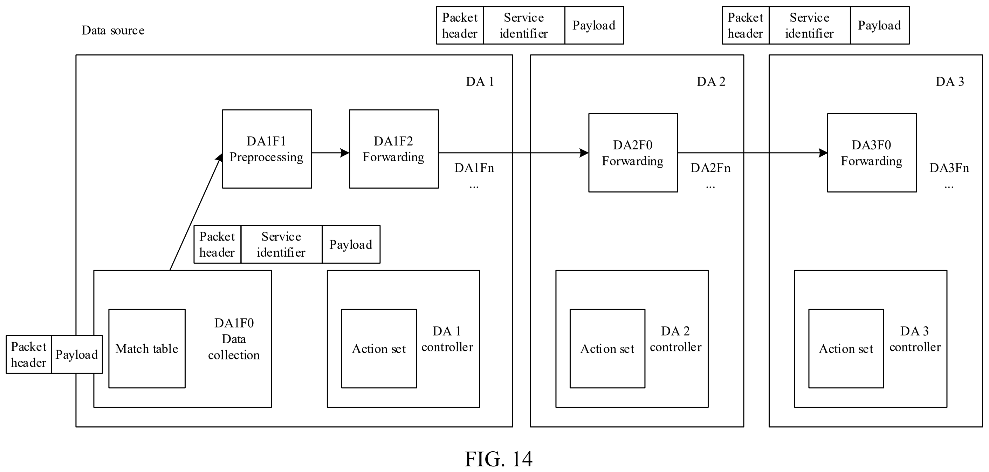

In a possible implementation, as shown in FIG. 14, the data orchestration or control apparatus may deliver a match table to data collection in the DA 1, deliver the action set of the DA 1 to a DA 1 controller in the DA 1, and deliver action sets of the DA 2 and the DA 3 to corresponding DA controllers in the DA 2 and the DA 3 respectively. The DA 1 may be built in the data source, DA1F0 may be a data collection function, DA1F1 may be a preprocessing function, and DA1F2 may be a forwarding function. DA2F0 in the DA 2 may be a forwarding function. DA3F0 in the DA 3 may be an analytics function.

After receiving a collection instruction, the DA 1 in the data source may perform a collection operation. After collected data (for example, packet header (Header) + payload (Payload)) is processed by using the match table, data that meets the service requirement may be accurately selected, and a service identifier (for example, packet header + service identifier + payload) is added, so that the data is subsequently preprocessed by DA1F1 based on the service identifier and then forwarded by DA1F2 to the DA 2. The DA2 also performs a forwarding function of DA2F0 based on the service identifier, and forwards the data to the DA 3. The DA 3 queries the action set corresponding to the service identifier and performs an analytics function of DA3F0. Subsequently, corresponding actions are performed according to settings.

Based on the foregoing descriptions of the match table and the action set in FIG. 6 to FIG. 14, the data orchestration or control apparatus may deliver, write, update, read, and delete the match table and the action set to/from the data agent apparatus (for example, the first communication apparatus), or deliver, write, update, read, and delete the action set to/from the data agent apparatus (for example, the second communication apparatus).

The data orchestration or control apparatus may update the match table and the action set when obtaining a new service requirement. Alternatively, when the service requirement is completed, the match table and the action set that are associated with the service requirement may be deleted.

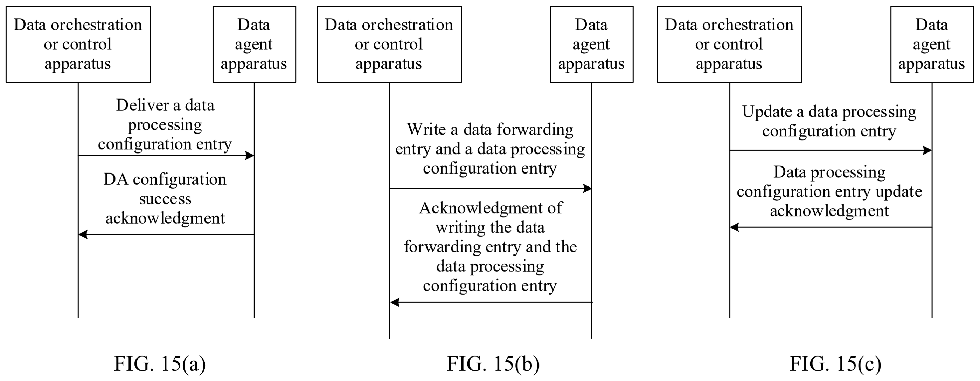

For example, as shown in FIG. 15(a), the data orchestration or control apparatus may deliver a data processing configuration entry carrying the match table and the action combination to the data agent apparatus, or deliver a data processing configuration entry carrying the action set to the data agent apparatus, and the data agent apparatus may send a DA configuration success acknowledgment to the data orchestration or control apparatus. When processing the data subsequently, the data agent apparatus may determine the match table and the action set based on the data processing configuration entry.

For example, as shown in FIG. 15(b), the data orchestration or control apparatus may write, to the data agent apparatus, a data forwarding entry carrying a data processing configuration entry including the match table and the action set, or write, to the data agent apparatus, a data forwarding entry carrying a data processing configuration entry including the action set, and the data agent apparatus may send, to the data orchestration or control apparatus, an acknowledgment of writing the data forwarding entry and the data processing configuration entry.

The data orchestration or control apparatus may write, to the data agent apparatus, the data forwarding entry carrying the data processing configuration entry, without delivering the data processing configuration entry by using additional signaling, thereby reducing signaling overheads.

For example, as shown in FIG. 15(c), the data orchestration or control apparatus may send, to the data agent apparatus, a data processing configuration entry carrying an updated match table and an updated action set, or send, to the data agent apparatus, a data processing configuration entry carrying an updated action set, and the data agent apparatus may send a data processing configuration entry update acknowledgment to the data orchestration or control apparatus.

The data orchestration or control apparatus may further update the data processing configuration entry based on the service requirement, to better meet the service requirement.

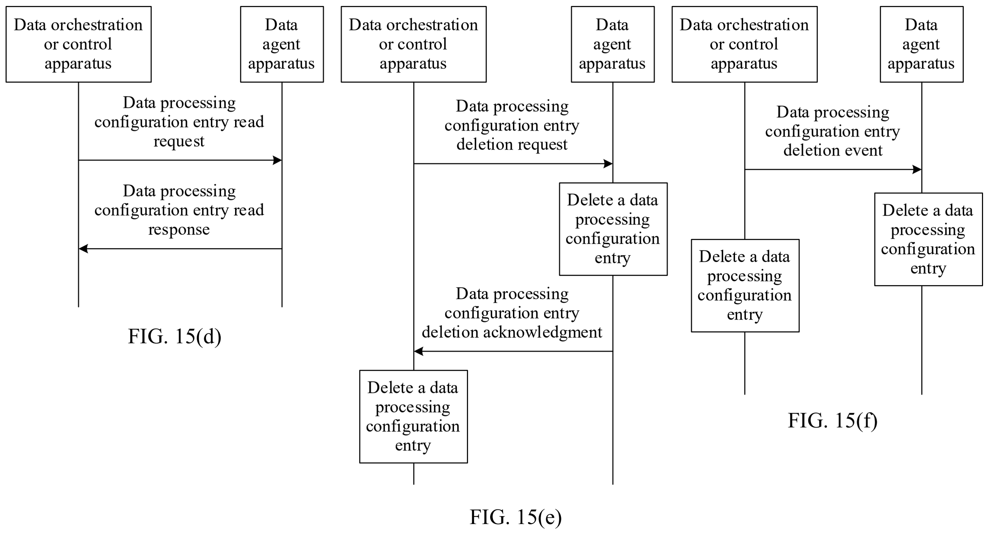

For example, as shown in FIG. 15(d), the data orchestration or control apparatus may send a data processing configuration entry read request to the data agent apparatus, and the data agent apparatus may send a data processing configuration entry read response to the data orchestration or control apparatus, where the data processing configuration entry read response may include the match table and the action set associated with the data agent apparatus, or include the action set associated with the data agent apparatus.

The data orchestration or control apparatus may read the data processing configuration entry of the data agent apparatus by using the data processing configuration entry read request, and then determine whether to adjust the data processing configuration entry, so as to better meet the service requirement.

For example, as shown in FIG. 15(e), the data orchestration or control apparatus may send a data processing configuration entry deletion request to the data agent apparatus, the data agent apparatus may send a data processing configuration entry deletion acknowledgment to the data orchestration or control apparatus after deleting the data processing configuration entry, and the data orchestration or control apparatus may also delete the data processing configuration entry of the data agent apparatus that is stored in the data orchestration or control apparatus.

The data orchestration or control apparatus may alternatively instruct the data agent apparatus to delete the data processing configuration entry after the data service is completed.

For example, as shown in FIG. 15(f), alternatively, the data agent apparatus may actively trigger a data processing configuration entry deletion event (for example, a timed trigger mode is used). Based on the event, the data agent apparatus and the data orchestration or control apparatus may delete the data processing configuration entry of the data agent apparatus.

The data agent apparatus may also actively trigger deletion of the data processing configuration entry after the data service is completed.

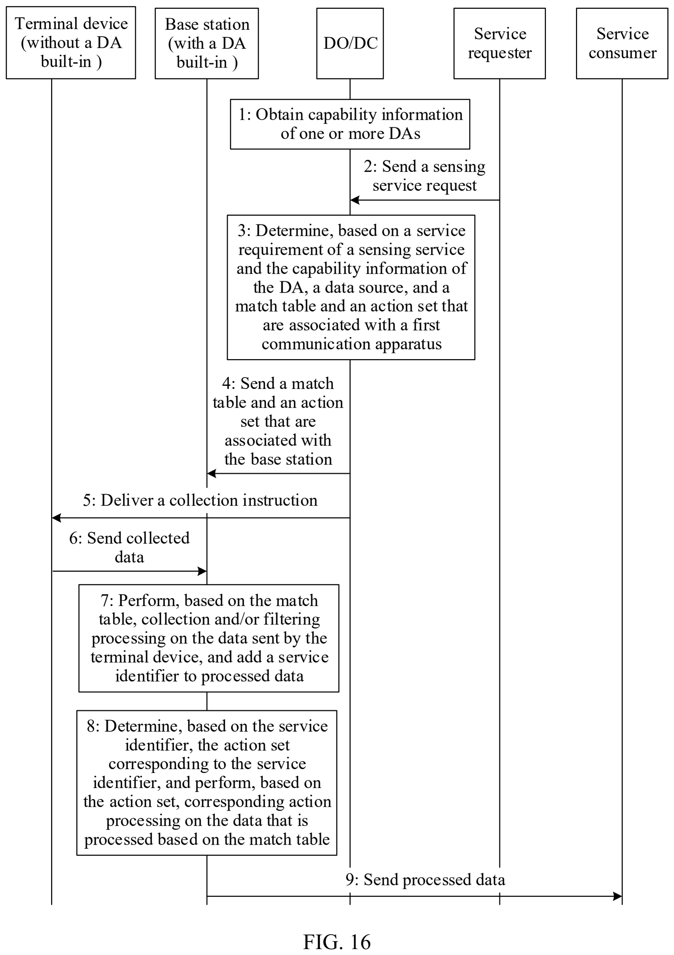

Based on the foregoing descriptions of the data collection and processing methods in FIG. 6 to FIG. 15(f), and with reference to FIG. 16, an example in which a data source is a sensing terminal device without a built-in DA, a first communication apparatus is a base station with a built-in DA, and a data orchestration or control apparatus is a DO/DC is used to describe in detail a process of collecting and transmitting sensing data.

FIG. 16 is a diagram of a data collection and processing method according to an embodiment of this application. As shown in FIG. 16, the method may include the following steps.

Step 1: A DO/DC obtains capability information of one or more DAs.

For example, the one or more DAs may report the capability information to the DO/DC in a manner of reporting a capability matrix or a capability vector, so that the DO/DC selects, based on the capability information, the one or more DAs for data transmission.

The one or more DAs may include a DA deployed in a base station.

Step 2: A service requester initiates a sensing service request to the DO/DC.

For example, a sensing mode may be that a terminal device sends sensing data, and that the base station receives the sensing data.

Step 3: The DO/DC determines, based on a service requirement of a sensing service and the capability information of the DA, a data source, and a match table and an action set that are associated with a first communication apparatus.

In a possible implementation, an action set associated with one or more second communication apparatuses may also be determined.

The data source may be a terminal device without a built-in DA, the first communication apparatus may be a base station with a built-in DA, and the one or more second communication apparatuses may be one or more data agent apparatuses other than the base station.

The match table may include a service identifier corresponding to the service requirement of the sensing service. The action set may also include the service identifier corresponding to the service requirement of the sensing service.

Step 4: The DO/DC sends, to the base station, a match table and an action set that are associated with the base station.

The DO/DC may deliver, to the built-in DA of the base station, the match table and the action set that are associated with the base station, to complete configuration of the match table and the action set.

In a possible implementation, the DO/DC may further send, to the second communication apparatus, the action set associated with the second communication apparatus.

Step 5: The DO/DC delivers a collection instruction to the terminal device.

Step 6: The terminal device collects data, and sends collected data to the base station.

Step 7: The base station performs, based on the match table, collection and/or filtering processing on the data sent by the terminal device, and adds the service identifier to processed data.

In a possible implementation, after performing, based on the match table, collection and/or filtering processing on the data sent by the terminal device, the base station may generate streaming data, or may generate file-type data. This is not limited.

Step 8: The base station determines, based on the service identifier, the action set corresponding to the service identifier, and performs, based on the action set, corresponding action processing on the data that is processed based on the match table.

In a possible implementation, because the data source (that is, the terminal device) has no built-in DA, the match table and the action set may be delivered to the base station accessed by the terminal device.

In a possible implementation, the sensing data sent by the terminal device to the base station may be classified into the following three types based on processing degrees:
1. Received signal or raw channel information: a complex result of a received signal or a channel response thereof, such as amplitude/phase, I/Q channel processed by an IQ modulation technology, and a related operation result, where I may represent an inphase component (inphase component), and Q may represent a quadrature component (quadrature component).
2. Sensing measurement data: measurement data obtained based on processing of the received signal or the raw channel information, for example, latency, Doppler, angle, and strength of a sampling point, and a multidimensional combination representation thereof, or for another example, location, velocity, and strength of a sampling point, and a multidimensional combination representation thereof.
3. Sensing result: data related to service functions and performance, obtained based on further processing such as computation and analytics of sensing measurement data, such as presence of a target, and a distance, velocity, orientation, acceleration, location, action, respiration rate/heart rate, imaging result, weather, air quality, material, and composition of the target.

For example, if the base station receives the received signal or the raw channel information, the base station may select an I/Q channel signal from the received signal or the raw channel information based on the match table, and perform corresponding action processing on the selected I/Q channel signal based on the action set.

For example, if the base station receives the sensing measurement data, the base station may select information such as latency, Doppler, angle, strength, and a multidimensional combination representation thereof from the sensing measurement data based on the match table, and the base station may further perform corresponding action processing on the selected information based on the action set.

For example, if the base station receives the sensing result, the base station may select information such as distance and velocity from the sensing result based on the match table, and the base station may further perform corresponding action processing on the selected information based on the action set.

Step 9: After performing the corresponding action based on the action set, the base station may send processed data to a data consumer.

In a possible implementation, if a next-hop communication apparatus of the base station is the data consumer, the base station may directly send the processed data to the data consumer. If one or more data agent apparatuses exist in a path between the base station and the data consumer, the one or more data agent apparatuses may process received data based on an action set associated with the one or more data agent apparatuses, and finally send processed data to the data consumer.

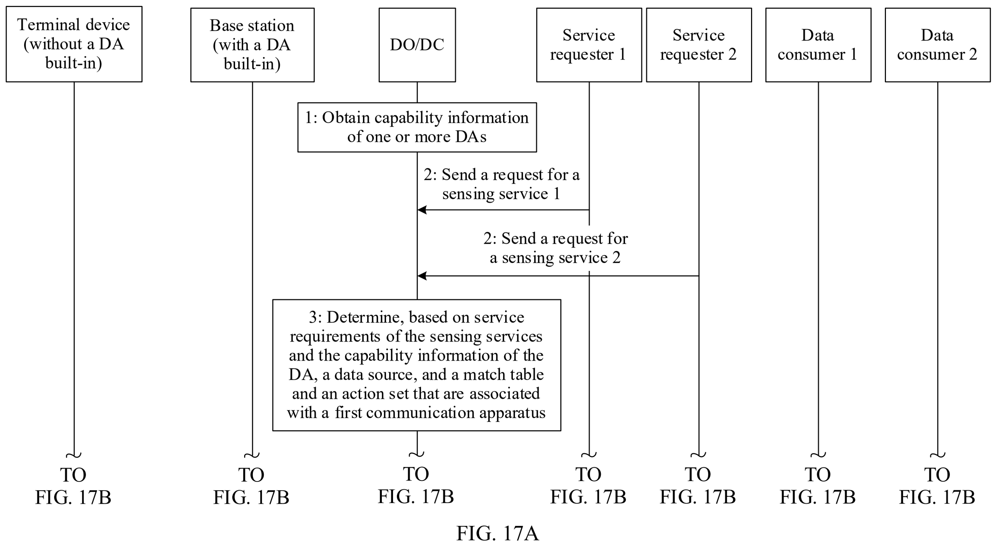

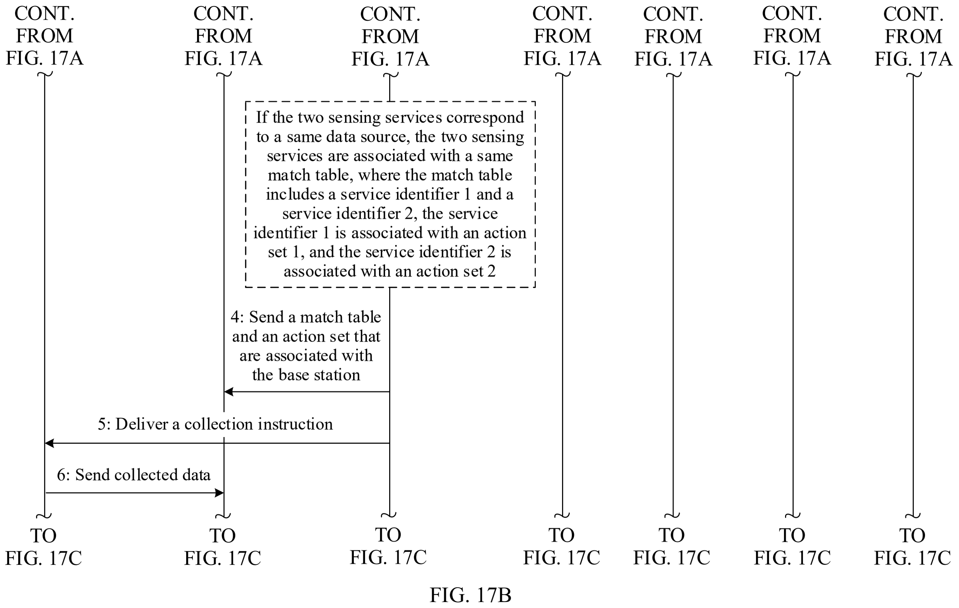

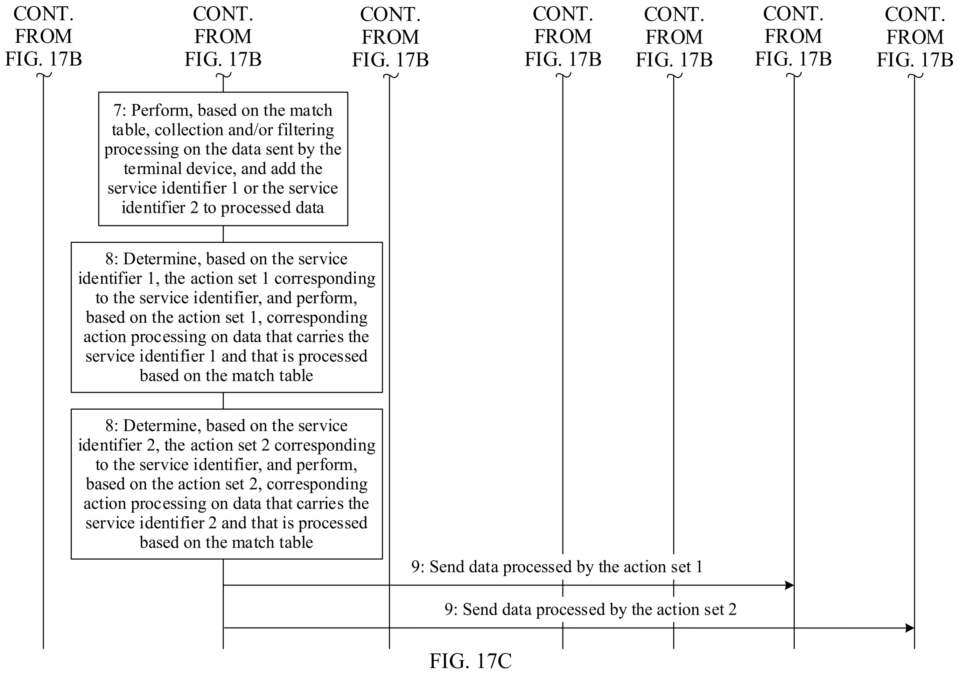

Based on the foregoing descriptions of the data collection and processing methods in FIG. 6 to FIG. 16, and with reference to FIG. 17A to FIG. 17C, an example in which a data source is a sensing terminal device without a built-in DA, a first communication apparatus is a base station with a built-in DA, and a data orchestration or control apparatus is a DO/DC is used to describe in detail a data collection and transmission process when data collection and/or filtering requirements of service requirements initiated by different service requesters are the same.

FIG. 17A to FIG. 17C are a diagram of a data collection and processing method according to an embodiment of this application. As shown in FIG. 17A to FIG. 17C, the method may include the following steps.

Step 1: A DO/DC obtains capability information of one or more DAs.

For the description of this step, refer to the description of step 1 in FIG. 16. Details are not described again.

Step 2: A service requester 1 and a service requester 2 respectively send a request for a sensing service 1 and a request for a sensing service 2 to the DO/DC.

Step 3: The DO/DC determines, based on service requirements of the sensing services and the capability information of the DA, a data source, and a match table and an action set that are associated with a first communication apparatus.

In a possible implementation, an action set associated with one or more second communication apparatuses may also be determined.

The data source may be a terminal device without a built-in DA, the first communication apparatus may be a base station with a built-in DA, and the one or more second communication apparatuses may be one or more data agent apparatuses other than the base station.

In a possible implementation, if the two sensing services correspond to a same data source, for example, a same event of a base station A, event-level parameters or cell-level parameters of a same cell may be combined. When creating a match table and an action set for the two sensing services, the DO/DC may create a same match table for the two sensing services. The match table may include two service identifiers (a service identifier 1 and a service identifier 2) that are used to identify the sensing service 1 and the sensing service 2 respectively, the service identifier 1 may be associated with an action set 1, and the service identifier 2 may be associated with an action set 2. In other words, the first communication apparatus may be associated with one match table and two action sets.

In a possible implementation, the service identifier 1 and the service identifier 2 may include a same DSID and different DPIDs. For example, the service identifier 1 includes a DSID1 and a DPID1, and the service identifier 2 may include the DSID1 and a DPID2.

Step 4: The DO/DC sends, to the base station, a match table and an action set that are associated with the base station.

The DO/DC may deliver, to the built-in DA of the base station, the match table and the action set that are associated with the base station, to complete configuration of the match table and the action set.

In a possible implementation, the DO/DC may further send, to the second communication apparatus, the action set associated with the second communication apparatus.

Step 5: The DO/DC delivers a collection instruction to the terminal device.

Step 6: The terminal device collects data, and sends collected data to the base station.

Step 7: The base station performs, based on the match table, collection and/or filtering processing on the data sent by the terminal device, and adds the service identifier 1 or the service identifier 2 to processed data.

Step 8: The base station determines, based on the service identifier, the action set corresponding to the service identifier, and performs, based on the action set, corresponding action processing on the data that is processed based on the match table.

For example, the base station may determine, based on the service identifier 1, the action set 1 corresponding to the service identifier 1, and perform, based on the action set 1, corresponding action processing on data that carries the service identifier 1 and that is processed based on the match table. The base station may determine, based on the service identifier 2, the action set 2 corresponding to the service identifier 2, and perform, based on the action set 2, corresponding action processing on data that carries the service identifier 2 and that is processed based on the match table.

Step 9: After performing the corresponding action based on the action set, the base station may send processed data to a data consumer.

For example, the base station may send, to a data consumer 1, data processed by the action set 1, and send, to a data consumer 2, data processed by the action set 2.

Based on the method shown in FIG. 17A to FIG. 17C, one-time collection and/or filtering can be implemented, and shared by a plurality of services, thereby avoiding repeated collection and/or filtering.

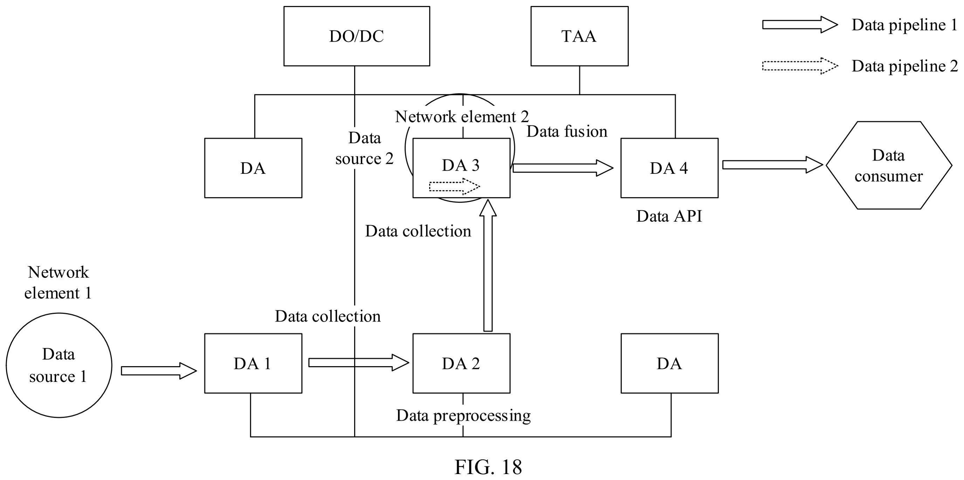

Based on the foregoing descriptions of the data collection and processing methods in FIG. 6 to FIG. 17C, and with reference to the following FIG. 18, an example in which a service requirement corresponds to a plurality of data sources is used. It is assumed that the data sources include a network element 1 without a built-in DA and a network element 2 with a built-in DA 3. The data collection and transmission process may include the following steps.

Step 1: A DO/DC may determine a data source 1 and a data source 2 based on a service requirement.

The data source 1 may be a network element 1 without a built-in DA, and the data source 2 may be a network element 2 with a built-in DA 3.

Step 2: The DO/DC determines data agent apparatuses in a data transmission process based on the service requirement and capability information of each DA.

For example, the data agent apparatuses in the data transmission process that are determined by the DO/DC may include a DA 1, a DA 2, the DA 3, and a DA 4.

Step 3: The DO/DC configures a match table and an action set for an initial data agent apparatus, and configures an action set for non-initial data agent apparatuses.

For example, the DO/DC may configure a match table and an action set for the DA 1, configure an action set for the DA 2, configure a match table and an action set for the DA 3, and configure an action set for the DA 4.

Step 4: The DO/DC sends a collection instruction to the data source 1 and the data source 2.

Step 5: The data source 1 collects data according to the collection instruction, and sends collected data to the DA 1.

Step 6: The DA 1 performs, based on the match table, collection and/or filtering processing on the data sent by the data source 1, adds the service identifier 1, performs, based on the action set associated with the service identifier 1, corresponding action processing on data obtained by performing the collection and/or filtering processing, and sends processed data to the DA 2.

The service identifier 1 may correspond to a data pipeline 1.

Step 7: The DA 2 determines the service identifier 1 based on the data sent by the DA 1, performs corresponding action processing (for example, data preprocessing) on the received data based on the action set associated with the service identifier 1, and sends processed data to the DA 3.

Step 6: The data source 2 collects data according to the collection instruction, performs collection and/or filtering processing on collected data based on the match table, and adds the service identifier 2.

The service identifier 2 may correspond to a data pipeline 2.

Step 7: The data source 2 fuses, based on the action set, data corresponding to the service identifier 1 and data corresponding to the service identifier 2, and sends fused data to the DA 4.

Step 8: The DA 4 performs, based on the action set, corresponding action processing on the data sent by the DA 3, and sends processed data to a data consumer.

Based on the methods shown in FIG. 9 to FIG. 18, in embodiments of this application, a DA standardization solution may be used. A DA is built in an NF, so that necessary data is provided for a third-party user (for example, a data consumer) by using a standardized interface. Compared with an integrated third-party probe agent, a problem of solution fragmentation and inconsistency caused by lack of standardization between different probe vendors can be avoided. In addition, a change to a container orchestration engine (kubernetes, K8S) cluster can be avoided to accommodate external probes, thereby reducing performance loss and security problems.

In addition, the built-in DA in the terminal device, access network device, or core network device can implement soft collection, match cloud-native service-based interface (service-based interface, SBI) encryption, dynamic NF instantiation, and an encryption environment such as K8S deployment, and minimize impact on NF performance and security. For example, capital expenditure (capital expenditure, CAPEX) can be reduced by at least 50%, and an operating expense (operating expense, OPEX) can be reduced by at least 90%.

In addition, because data collection and/or filtering occur/occurs in the initial data agent apparatus, traffic and storage space within an infrastructure can be significantly reduced. Because soft probes are built-in NFs, the soft probes can be deployed at distributed edge sites along with the NFs. The built-in soft probes may be independent of the cloud infrastructure and can access a decrypted NF SBI data packet. The built-in soft probes can adapt to an existing cloudification trend well, be flexibly deployed on demand, and have good scalability.

It should be noted that embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined into a new embodiment based on an internal logical relationship thereof.

It may be understood that an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all the operations in embodiments of this application may be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more than two functions may be integrated into one processing module. The integrated module may be implemented in a form of hardware, or may be implemented in a form of a software functional module. It should be noted that module division in embodiments of this application is an example, and is merely logical function division. There may be another division manner in actual implementation.

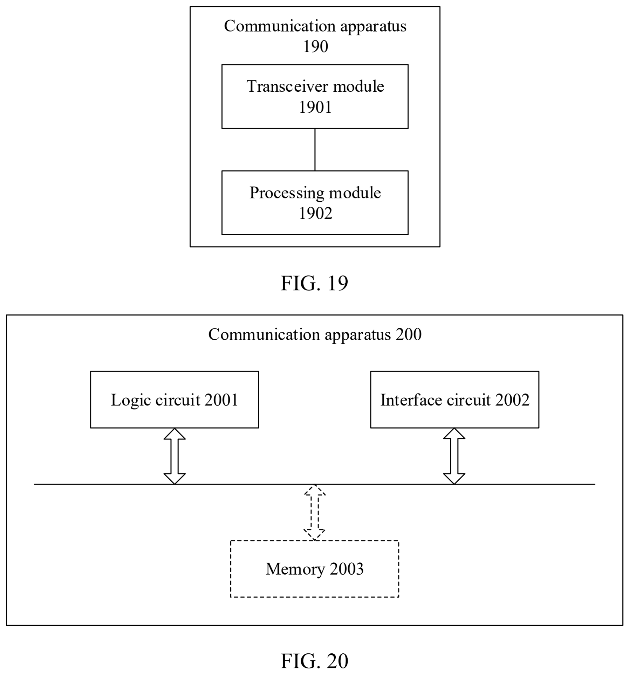

When each functional module is obtained through division based on each corresponding function, FIG. 19 shows a communication apparatus 190. The communication apparatus 190 may perform actions performed by the data orchestration or control apparatus, the first communication apparatus, the second communication apparatus, or the data source in the methods shown in FIG. 6 to FIG. 18. All related content of steps in the foregoing method embodiments may be referenced in functional descriptions of corresponding functional modules. For technical effects that can be achieved by the communication apparatus 190, refer to the foregoing method embodiments. Details are not described herein again.

The communication apparatus 190 may include a transceiver module 1901 and a processing module 1902. For example, the communication apparatus 190 may be a communication device, or may be a chip used in the communication device, or another combined device or component that has a function of the communication apparatus. When the communication apparatus 190 is a communication device, the transceiver module 1901 may be a transceiver, where the transceiver may include an antenna, a radio frequency circuit, and the like; and the processing module 1902 may be a processor (or a processing circuit), for example, a baseband processor, where the baseband processor may include one or more CPUs. When the communication apparatus 190 is a component that has a function of the communication apparatus, the transceiver module 1901 may be a radio frequency unit, and the processing module 1902 may be a processor (or a processing circuit), for example, a baseband processor. When the communication apparatus 190 is a chip system, the transceiver module 1901 may be an input/output interface of a chip (for example, a baseband chip), and the processing module 1902 may be a processor (or a processing circuit) of the chip system and may include one or more central processing units. It should be understood that the transceiver module 1901 in this embodiment of this application may be implemented by a transceiver or a transceiver-related circuit component, and the processing module 1902 may be implemented by a processor or a processor-related circuit component (or referred to as a processing circuit).

For example, the transceiver module 1901 may be configured to perform all sending and receiving operations performed by the communication apparatus in the embodiments shown in FIG. 6 to FIG. 18, and/or configured to support another process of the technology described in this specification. The processing module 1902 may be configured to perform all operations other than sending and receiving operations performed by the communication apparatus in the embodiments shown in FIG. 6 to FIG. 18, and/or configured to support another process of the technology described in this specification.

In another possible implementation, the transceiver module 1901 in FIG. 19 may be replaced with a transceiver, and a function of the transceiver module 1901 may be integrated into the transceiver. The processing module 1902 may be replaced with a processor, and a function of the processing module 1902 may be integrated into the processor. Further, the communication apparatus 190 shown in FIG. 19 may further include a memory.

Alternatively, when the processing module 1902 is replaced with a processor, and the transceiver module 1901 is replaced with a transceiver, the communication apparatus 190 in this embodiment of this application may be a communication apparatus 200 shown in FIG. 20. The processor may be a logic circuit 2001, and the transceiver may be an interface circuit 2002. Further, the communication apparatus 200 shown in FIG. 20 may further include a memory 2003.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by related hardware instructed by a computer program. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The foregoing computer-readable storage medium may alternatively be an external storage device of the foregoing terminal, for example, a plug-in hard disk, a smart memory card (smart media card, SMC), a secure digital (secure digital, SD) card, or a flash card (flash card) that is configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. The terms "first" and "second" are intended only for description, and shall not be understood as an indication or implication of relative importance or an implicit indication of a quantity of indicated technical features. Therefore, a feature defined by "first" or "second" may explicitly or implicitly include one or more features. In the description of the embodiments, unless otherwise specified, the term "a plurality of" means two or more.

In addition, the terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item) "means one or more. "A plurality of" means two or more than two. "At least two (items)" means two, three, or more than three. "And/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In embodiments of this application, the term "example", "for example", or the like represents an example, an illustration, or a description. Any embodiment or design scheme described as "example" or "for example" in embodiments of this application should not be construed as being more preferred or advantageous than another embodiment or design scheme. Exactly, use of the terms such as "example" or "for example" is intended to present a related concept in a specific manner for ease of understanding.

In this application, "sending information to ... (a terminal device)" may be understood as that a destination of the information is the terminal device, and may include directly or indirectly sending the information to the terminal device. "Receiving information from ... (a terminal device)" may be understood as that a source of the information is the terminal device, and may include directly or indirectly receiving the information from the terminal device. Information may undergo necessary processing, for example, a format change, between the source for sending the information and the destination. However, the destination may understand valid information from the source.

Based on the foregoing descriptions of implementations, a person skilled in the art may clearly understand that, for the purpose of convenient and brief description, division of the foregoing functional modules is used as an example for illustration. In actual application, the foregoing functions can be allocated to different modules and implemented based on a requirement, that is, an internal structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division of modules or units is merely logical function division and may be other division in actual implementation. For example, a plurality of units or components may be combined or integrated into another apparatus, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one physical unit or a plurality of physical units, that is, the parts may be located in one position or distributed in a plurality of different positions. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A data collection and processing method, comprising:
obtaining a match table and an action set that are associated with a first communication apparatus; and
sending, to the first communication apparatus, the match table and the action set that are associated with the first communication apparatus, wherein the first communication apparatus is an initial data agent apparatus in a data transmission process, the match table indicates collection and/or filtering processing on data obtained from a data source, the match table comprises identification information of the first communication apparatus and a service identifier, and the action set indicates one or more actions associated with the service identifier.

2. The method according to claim 1, wherein
the match table further comprises one or more of the following: collection and/or filtering time, collection and/or filtering area, measurement quantity, data type, source address of data, destination address of data, quality of service policy, forwarding policy, network-element-level status information, port-level status information, queue-level status information, data-packet-level status information, flow-table-level status information, or flow-level status information.

3. The method according to claim 1 or 2, wherein
when data collection and/or filtering requirements of a plurality of service requirements from different users are identical, the plurality of service requirements are associated with a same match table, and the match table comprises a plurality of different service identifiers associated with the plurality of service requirements.

4. The method according to any one of claims 1 to 3, wherein
the first communication apparatus is associated with one or more match tables and one or more action sets.

5. The method according to any one of claims 1 to 4, wherein
the first communication apparatus is the data source; or
the first communication apparatus is a next-hop data agent apparatus of the data source.

6. The method according to any one of claims 1 to 5, wherein before the obtaining the match table and the action set that are associated with the first communication apparatus, the method further comprises:
obtaining a service requirement, wherein the data source is a source device of data corresponding to the service requirement, and the service identifier indicates the service requirement.

7. The method according to any one of claims 1 to 6, wherein the method further comprises:
sending first indication information to the first communication apparatus, wherein the first indication information indicates a service identifier added to processed data.

8. The method according to any one of claims 1 to 7, wherein the method further comprises:
receiving capability information from one or more data agent apparatuses, wherein the capability information comprises one or more of the following: a data collection and/or filtering capability, a preprocessing capability, an analytics capability, and a storage capability; and
determining the first communication apparatus based on the service requirement and the capability information of the one or more data agent apparatuses.

9. The method according to claim 8, wherein
the data collection and/or filtering capability comprises one or more of the following: collection and/or filtering time, collection and/or filtering area, measurement quantity, data type, source address of data, destination address of data, quality of service policy, network-element-level status information, port-level status information, queue-level status information, data-packet-level status information, flow-table-level status information, or flow-level status information.

10. The method according to any one of claims 1 to 9, wherein the sending, to the first communication apparatus, the match table and the action set that are associated with the first communication apparatus comprises:
sending, to the first communication apparatus, a data forwarding entry carrying the match table and the action set that are associated with the first communication apparatus, wherein the data forwarding entry indicates address information of a next-hop communication apparatus of the first communication apparatus.

11. The method according to any one of claims 1 to 10, wherein the method further comprises:
sending, to a second communication apparatus, an action set associated with the second communication apparatus, wherein the second communication apparatus is a non-initial data agent apparatus in the data transmission process.

12. The method according to claim 11, wherein the method further comprises:
sending first indication information to the second communication apparatus, wherein the first indication information indicates a service identifier added to processed data.

13. The method according to claim 11 or 12, wherein the method further comprises:
receiving capability information from one or more data agent apparatuses, wherein the capability information comprises one or more of the following: a data collection and/or filtering capability, a preprocessing capability, an analytics capability, and a storage capability; and
determining one or more second communication apparatuses based on the service requirement and the capability information of the one or more data agent apparatuses.

14. The method according to any one of claims 1 to 13, wherein the method further comprises:
sending a collection instruction to the data source, wherein the collection instruction comprises the service identifier, and the collection instruction instructs the data source to add the service identifier to collected data.

15. A data collection and processing method, comprising:
receiving, from a data orchestration or control apparatus, a match table and an action set that are associated with a first communication apparatus, wherein the first communication apparatus is an initial data agent apparatus in a data transmission process, the match table indicates collection and/or filtering processing on data obtained from a data source, the match table comprises identification information of the first communication apparatus and a service identifier, and the action set indicates one or more actions associated with the service identifier;
obtaining first data, wherein the first data is data obtained by performing, based on the match table, collection and/or filtering processing on data corresponding to a service requirement, and the first data comprises the service identifier; and
sending second data, wherein the second data is data obtained by processing the first data based on the service identifier and the action set, and the second data comprises the service identifier.

16. The method according to claim 15, wherein
the match table further comprises one or more of the following: collection and/or filtering time, collection and/or filtering area, measurement quantity, data type, source address of data, destination address of data, quality of service policy, forwarding policy, network-element-level status information, port-level status information, queue-level status information, data-packet-level status information, flow-table-level status information, or flow-level status information.

17. The method according to claim 15 or 16, wherein
when data collection and/or filtering requirements of a plurality of service requirements from different users are identical, the plurality of service requirements are associated with a same match table, and the match table comprises a plurality of different service identifiers associated with the plurality of service requirements.

18. The method according to any one of claims 15 to 17, wherein
the first communication apparatus is associated with one or more match tables and one or more action sets.

19. The method according to any one of claims 15 to 18, wherein
the first communication apparatus is the data source; or
the first communication apparatus is a next-hop data agent apparatus of the data source.

20. The method according to claim 19, wherein if the first communication apparatus is the data source, the obtaining the first data comprises:
receiving a collection instruction from the data orchestration or control apparatus, wherein the collection instruction comprises the service identifier, and the collection instruction instructs the data source to add the service identifier to collected data; and
obtaining the first data according to the collection instruction.

21. The method according to claim 19, wherein if the first communication apparatus is the data source, the obtaining the first data comprises:
obtaining the first data by performing data collection and/or filtering processing based on the match table.

22. The method according to claim 19, wherein if the first communication apparatus is the next-hop data agent apparatus of the data source, the obtaining the first data comprises:
sending a collection instruction to the data source based on the match table;
receiving collected data from the data source; and
obtaining the first data by processing the collected data based on the match table.

23. The method according to claim 22, wherein
the collection instruction comprises the service identifier, and the collection instruction instructs the data source to add the service identifier to the collected data.

24. The method according to any one of claims 15 to 23, wherein the method further comprises:
obtaining a plurality of pieces of first data, wherein the plurality of pieces of first data have a same data service identifier but different data pipeline identifiers; and
if the action set of the first communication apparatus comprises data fusion, fusing the plurality of pieces of first data.

25. The method according to any one of claims 15 to 24, wherein the method further comprises:
receiving first indication information from the first communication apparatus, wherein the first indication information indicates a service identifier added to processed data.

26. The method according to any one of claims 15 to 25, wherein the method further comprises:
sending capability information to the data orchestration or control apparatus, wherein the capability information comprises one or more of the following: a data collection and/or filtering capability, a preprocessing capability, an analytics capability, and a storage capability, and the data collection and/or filtering capability comprises one or more of the following: collection and/or filtering time, collection and/or filtering area, measurement quantity, data type, source address of data, destination address of data, quality of service policy, network-element-level status information, port-level status information, queue-level status information, data-packet-level status information, flow-table-level status information, or flow-level status information.

27. The method according to any one of claims 15 to 26, wherein receiving, from the data orchestration or control apparatus, the match table and the action set that are associated with the first communication apparatus comprises:
receiving a data forwarding entry from the data orchestration or control apparatus, wherein the data forwarding entry comprises the match table and the action set that are associated with the first communication apparatus, and the data forwarding entry indicates address information of a next-hop communication apparatus of the first communication apparatus.

28. A data collection and processing method, comprising:
obtaining a collection instruction, wherein the collection instruction comprises a service identifier, and the collection instruction instructs the data source to add the service identifier to collected data; and
sending the collected data to a first communication apparatus according to the collection instruction, wherein the first communication apparatus is an initial data agent apparatus in a data transmission process, and the collected data comprises the service identifier.

29. The method according to claim 28, wherein obtaining the collection instruction comprises:
receiving the collection instruction from a data orchestration or control apparatus; or
receiving the collection instruction from the first communication apparatus.

30. A communication apparatus, wherein the communication apparatus comprises a processor, wherein the processor is configured to enable, by running a computer program or instructions or using a logic circuit, the communication apparatus to perform the data collection and processing method according to any one of claims 1 to 14, or perform the data collection and processing method according to any one of claims 15 to 27, or perform the data collection and processing method according to claim 28 or 29.

31. A communication apparatus, wherein the communication apparatus comprises an input/output interface and a logic circuit, wherein the input/output interface is configured to input and/or output information, and the logic circuit is configured to perform the data collection and processing method according to any one of claims 1 to 14, or perform the data collection and processing method according to any one of claims 15 to 27, or perform the data collection and processing method according to claim 28 or 29, to perform processing based on the information and/or generate the information.

32. A computer-readable storage medium, wherein the computer-readable storage medium stores computer instructions or a program, and when the computer instructions or the program is run on a computer, the computer is enabled to perform the data collection and processing method according to any one of claims 1 to 14, or perform the data collection and processing method according to any one of claims 15 to 27, or perform the data collection and processing method according to claim 28 or 29.

33. A computer program product, wherein the computer program product comprises computer instructions, and when some or all of the computer instructions are run on a computer, the computer is enabled to perform the data collection and processing method according to any one of claims 1 to 14, or perform the data collection and processing method according to any one of claims 15 to 27, or perform the data collection and processing method according to claim 28 or 29.
